(19)

Europäisches Patentamt

European Patent Office

Office européen des brevets

(11) **EP 3 185 114 A1**

(12) **EUROPEAN PATENT APPLICATION**

(43) Date of publication:
28.06.2017 Bulletin 2017/26

(51) Int Cl.:
*G06F 3/0488* (2013.01)    *G06F 3/0481* (2013.01)
*G06F 3/0482* (2013.01)    *G06F 3/0485* (2013.01)

(21) Application number: 16203574.5

(22) Date of filing: 13.12.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 24.12.2015 CN 201510984779

(71) Applicant: **Xiaomi Inc.**
**Beijing 100085 (CN)**

(72) Inventors:
- **SHI, Runyu**
**BEIJING, 100085 (CN)**
- **LI, Weishan**
**BEIJING, 100085 (CN)**
- **WAN, Ni**
**BEIJING, 100085 (CN)**

(74) Representative: **Fontenelle, Sandrine et al**
**Cabinet Beau de Loménie**
**158, rue de l'Université**
**75340 Paris Cedex 07 (FR)**

(54) **INTERFACE DISPLAY METHOD AND APPARATUS, COMPUTER PROGRAM AND RECORDING MEDIUM**

(57) Disclosed are an interface display method and apparatus, a computer program and a recording medium, which pertain to the field of mobile terminals. The interface display method includes: receiving (201) a first sliding signal acting on a user interface; translating and displaying (202) an interface content in the user interface according to the first sliding signal; and when the interface content is translated to a scrolling area at an edge of the user interface, displaying (203) the interface content in the scrolling area in a scrolling display manner, the scrolling display manner being a display manner in which the interface content is projection-displayed on a plane where the scrolling area is located when the interface content scrolls and retracts along a scrolling path in a three dimensional space.

Fig. 3D

**Description**

**TECHNICAL FIELD**

The present invention relates to the field of mobile terminals, and more particularly to an interface display method and apparatus, a computer program and a recording medium.

**BACKGROUND**

If there are too many interface contents to be displayed by a mobile terminal, due to the size limitation of the screen of the mobile terminal, it is often impossible to display all the interface contents in the user interface.

In related art, a user may operate the mobile terminal to display hidden interface contents displayed in the user interface by performing a sliding operation. For example, when the mobile terminal receives an upward sliding signal acting on the user interface, the interface contents in the user interface may slide upwardly accordingly. As such, the interface contents which were hidden below the user interface can slide upwardly and thus be displayed in the user interface.

**SUMMARY**

In order to solve the problem in the related art that the interface content may disappear suddenly when the interface content slides to the edge of the user interface, the present invention provides an interface display method and apparatus , a computer program and a recording medium as follows.

According to a first aspect of embodiments of the present invention, an interface display method is provided, including: receiving a first sliding signal acting on a user interface; translating and displaying an interface content in the user interface according to the first sliding signal; and when the interface content is translated to a scrolling area at the edge, displaying the interface content in the scrolling area in a scrolling display manner, the scrolling display manner being a display manner in which the interface content is projection-displayed on the plane of the scrolling area when the interface content scrolls and retracts along a scrolling path in a three dimensional space.

In an embodiment, the scrolling path is a curved path or a broken path; the curved path includes any one of a helical path, a fan-shaped path, an elliptic fan-shaped path, a hyperbolic path and a parabolic path; and the broken path is formed by connecting a start point, an end point and n intermediate points in the three dimensional space according to a preset connection order, n being an integer greater than or equal to 0.

In an embodiment, the scrolling area is an area between a scrolling line of the user interface and the edge, the scrolling line being any one of a straight line, a broken line and a curved line.

In an embodiment, displaying the interface content in the scrolling area in a scrolling display manner comprises: displaying, according to a sliding speed of the first sliding signal, the interface content which scrolls along the scrolling path; or displaying, according to a first speed, the interface content which scrolls along the scrolling path, the first speed being inversely related to a projected distance of a scrolling distance on the plane of the scrolling area, the scrolling distance being a distance which the interface content scrolls along the scrolling path; or displaying, according to a first preset initial speed and a first preset acceleration, the interface content which scrolls along the scrolling path in a uniformly decelerated manner.

In an embodiment, the method further includes: after stopping translating the interface content to the scrolling area, displaying in the scrolling area in a reverse scrolling display manner the interface content which entered the scrolling area, the reverse scrolling display manner being a display manner in which the interface content is projection-displayed on the plane of the scrolling area when the interface content scrolls out of the scrolling area reversely along the scrolling path in the three dimensional space; and reversely translating and displaying an interface content in an area in the user interface other than the scrolling area.

In an embodiment, the method further includes: receiving a second sliding signal, the second sliding signal having a sliding direction opposite to that of the first sliding signal, wherein after receiving the second sliding signal, the interface content which entered the scrolling area is displayed in the scrolling area in a reverse scrolling display manner.

In an embodiment, displaying in the scrolling area in a reverse scrolling display manner the interface content which entered the scrolling area comprises: displaying in the scrolling area according to a preset speed the interface content which scrolls out of the scrolling area reversely along the scrolling path; or displaying, according to a second preset initial speed and a second preset acceleration, the interface content which scrolls out of the scrolling area along the scrolling path in a uniformly accelerated manner reversely; or displaying, according to a second speed, the interface content which scrolls out of the scrolling area along the scrolling path reversely, the second speed varying as a function of an output of a preset trigonometric function.

In an embodiment, the method further includes: when the first sliding signal ends, stopping translating the interface content to the scrolling area; or when a preset content in the interface content moves to a preset location in the user interface, stopping translating the interface content to the scrolling area, the preset content being a content at a trigger location in the user interface corresponding to the first sliding signal or a content in the user interface which is furthest from the scrolling area; or when the interface content slides in a decelerated manner and its sliding speed reduces to zero, stopping translating the interface content to the scrolling area.

In an embodiment, the method further includes: during the movement of the interface content, if a blank area appears at an edge on a side of the user interface opposite to the scrolling area, filling and displaying a preset filling content in the blank area.

According to a second aspect of the embodiments of the present invention, an interface display method is provided, including: receiving a sliding signal acting on a user interface; translating and displaying an interface content in the user interface according to the sliding signal; and when an interface content displayed in a hidden manner in the user interface enters a scrolling area at an edge of the user interface from the outside of a screen, displaying the interface content in the scrolling area in a scrolling display manner, the scrolling display manner being a display manner in which the interface content is projection-displayed on a plane where the scrolling area is located when the interface content scrolls and retracts along a scrolling path in a three dimensional space.

In an embodiment, the scrolling path is a curved path or a broken path; the curved path includes any one of a helical path, a fan-shaped path, an elliptic fan-shaped path, a hyperbolic path and a parabolic path; and the broken path is formed by connecting a start point, an end point and n intermediate points in the three dimensional space according to a preset connection order, n being an integer greater than or equal to 0.

In an embodiment, the scrolling area is an area between a scrolling line of the user interface and the edge, the scrolling line being any one of a straight line, a broken line and a curved line.

In an embodiment, displaying the interface content in the scrolling area in a scrolling display manner comprises: displaying, according to a sliding speed of the sliding signal, the interface content which scrolls along the scrolling path; or displaying, according to a target speed, the interface content which scrolls along the scrolling path, the target speed being inversely related to a projected distance of a scrolling distance on the plane of the scrolling area, the scrolling distance being a distance which the interface content scrolls along the scrolling path; or displaying, according to a preset initial speed and a preset acceleration, the interface content which scrolls along the scrolling path in a uniformly decelerated manner.

In an embodiment, the method further includes: when the sliding signal ends, stopping translating the interface content to the scrolling area; or when a preset content in the interface content moves to a preset location in the user interface, stopping translating the interface content to the scrolling area, the preset content being a content at a trigger location in the user interface corresponding to the sliding signal or a content in the user interface which is furthest from the scrolling area; or when the interface content slides in a decelerated manner and its sliding speed reduces to zero, stopping translating the interface content to the scrolling area.

According to a third aspect of the embodiments of the present invention, an interface display apparatus is provided, including: a first receiving module configured to receive a first sliding signal acting on a user interface; a first display module configured to translate and display an interface content in the user interface according to the first sliding signal; and a second display module configured to, when the interface content is translated to a scrolling area at an edge of the user interface, display the interface content in the scrolling area in a scrolling display manner, the scrolling display manner being a display manner in which the interface content is projection-displayed on a plane in which the scrolling area is located when the interface content scrolls and retracts along a scrolling path in a three dimensional space.

In an embodiment, the scrolling path is a curved path or a broken path; the curved path includes any one of a helical path, a fan-shaped path, an elliptic fan-shaped path, a hyperbolic path and a parabolic path; and the broken path is formed by connecting a start point, an end point and n intermediate points in the three dimensional space according to a preset connection order, n being an integer greater than or equal to 0.

In an embodiment, the scrolling area is an area between a scrolling line of the user interface and the edge, the scrolling line being any one of a straight line, a broken line and a curved line.

In an embodiment, the second display module is configured to: display, according to a sliding speed of the first sliding signal, the interface content which scrolls along the scrolling path; or display, according to a first speed, the interface content which scrolls along the scrolling path, the first speed being inversely related to a projected distance of a scrolling distance on the plane of the scrolling area, the scrolling distance being a distance which the interface content scrolls along the scrolling path; or display, according to a first preset initial speed and a first preset acceleration, the interface content which scrolls along the scrolling path in a uniformly decelerated manner.

In an embodiment, the apparatus further includes: a third display module configured to, after translation of the interface content to the scrolling area is stopped, display in the scrolling area in a reverse scrolling display manner the interface content which entered the scrolling area, the reverse scrolling display manner being a display manner in which the interface content is projection-displayed on the plane of the scrolling area when the interface content scrolls out of the scrolling area reversely along the scrolling path in the three dimensional space; and a fourth display module configured to reversely translate and display an interface content in an area in the user interface other than the scrolling area.

In an embodiment, the apparatus further includes: a second receiving module configured to receive a second sliding signal, the second sliding signal having a sliding direction opposite to that of the first sliding signal. The third display module is configured to, after the second sliding signal is received, display in the scrolling area in a reverse scrolling display manner the interface content which entered the scrolling area.

In an embodiment, the third display module is configured to: display in the scrolling area according to a preset speed the interface content which scrolls out of the scrolling area reversely along the scrolling path; display, according to a second preset initial speed and a second preset acceleration, the interface content which scrolls out of the scrolling area along the scrolling path in a uniformly accelerated manner reversely; or display, according to a second speed, the interface content which scrolls out of the scrolling area along the scrolling path reversely, the second speed varying as a function of an output of a preset trigonometric function.

In an embodiment, the apparatus further comprises a translation stopping module, wherein the translation stopping module is configured to: when the first sliding signal ends, stop translating the interface content to the scrolling area; or when a preset content in the interface content moves to a preset location in the user interface, stop translating the interface content to the scrolling area, the preset content being a content at a trigger location in the user interface corresponding to the first sliding signal or a content in the user interface which is furthest from the scrolling area; or when the interface content slides in a decelerated manner and its sliding speed reduces to zero, stop translating the interface content to the scrolling area.

In an embodiment, the apparatus further includes: a content filling module configured to, during the movement of the interface content, if a blank area appears at an edge on a side of the user interface opposite to the scrolling area, fill and display a preset filling content in the blank area.

According to a fourth aspect of the embodiments of the present invention, an interface display apparatus is provided, including: a receiving module configured to receive a sliding signal acting on a user interface; a first display module configured to translate and display an interface content in the user interface according to the sliding signal received by the receiving module; and a second display module configured to, when an interface content displayed in a hidden manner in the user interface enters a scrolling area at an edge of the user interface from the outside of a screen, display the interface content in the scrolling area in a scrolling display manner, the scrolling display manner being a display manner in which the interface content is projection-displayed on a plane where the scrolling area is located when the interface content scrolls and retracts along a scrolling path in a three dimensional space.

In an embodiment, the scrolling path is a curved path or a broken path; the curved path includes any one of a helical path, a fan-shaped path, an elliptic fan-shaped path, a hyperbolic path and a parabolic path; and the broken path is formed by connecting a start point, an end point and n intermediate points in the three dimensional space according to a preset connection order, n being an integer greater than or equal to 0.

In an embodiment, the scrolling area is an area between a scrolling line of the user interface and the edge, the scrolling line being any one of a straight line, a broken line and a curved line.

In an embodiment, the second display module is configured to: display, according to a sliding speed of the sliding signal, the interface content which scrolls along the scrolling path; display, according to a target speed, the interface content which scrolls along the scrolling path, the target speed being inversely related to a projected distance of a scrolling distance on the plane of the scrolling area, the scrolling distance being a distance which the interface content scrolls along the scrolling path; or display, according to a preset initial speed and a preset acceleration, the interface content which scrolls along the scrolling path in a uniformly decelerated manner.

In an embodiment, the apparatus further comprises a translation stopping module, wherein the translation stopping module is configured to: when the sliding signal ends, stop translating the interface content to the scrolling area; or when a preset content in the interface content moves to a preset location in the user interface, stop translating the interface content to the scrolling area, the preset content being a content at a trigger location in the user interface corresponding to the sliding signal or a content in the user interface which is furthest from the scrolling area; or when the interface content slides in a decelerated manner and its sliding speed reduces to zero, stop translating the interface content to the scrolling area.

According to a fifth aspect of the embodiments of the present invention, an interface display apparatus is provided, including: a processor; and a memory for storing instructions executable by the processor. The processor is configured to: receive a first sliding signal acting on a user interface; translate and display an interface content in the user interface according to the first sliding signal; and when the interface content is translated to a scrolling area at an edge of the user interface, display the interface content in the scrolling area in a scrolling display manner, the scrolling display manner being a display manner in which the interface content is projection-displayed on a plane where the scrolling area is located when the interface content scrolls and retracts along a scrolling path in a three dimensional space.

In one particular embodiment, the steps of the interface display method are determined by computer program instructions.

Consequently, according to a sixth aspect, the invention is also directed to a computer program for executing the steps of the interface display method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in the embodiments of the present invention may include the following beneficial effects. When an interface content in a user interface is translated to a scrolling area at an edge of the user interface, the interface content is displayed in the scrolling area in a scrolling display manner. The scrolling display manner is a display manner in which the interface content is projection-displayed on a plane where the scrolling area is located when the interface content scrolls and retracts along a scrolling path in a three dimensional space. As such, the problem in the related art that an interface content may disappear suddenly when the interface content slides to the edge of a user interface is solved; and the effects that the interface content can be displayed in a scrolling display manner in the scrolling area at the edge of the user interface so as to disappear from or enter the user interface smoothly and thus the suddenness caused when the interface content disappears or appears suddenly is reduced are achieved.

It is to be understood that both the foregoing general description and the following detailed description are exemplary only and are not restrictive of the present invention.

**BRIEF** DESCRIPTION OF THE DRAWINGS

The accompanying drawings, which are incorporated in and constitute a part of this specification, illustrate embodiments consistent with the invention and, together with the description, serve to explain the principles of the invention.

Fig. 1 is a schematic diagram of a scrolling area involved in an interface display method according to some exemplary embodiments.

Fig. 2 is a flowchart of an interface display method according to an exemplary embodiment.

Fig. 3A is a flowchart of an interface display method according to another exemplary embodiment.

Fig. 3B is a schematic diagram of presentation of a user interface by a mobile terminal according to another exemplary embodiment.

Fig. 3C is a schematic diagram of a scrolling path according to another exemplary embodiment.

Fig. 3D is a schematic diagram of scrolling display of an interface content in a scrolling area according to another exemplary embodiment.

Fig. 3E is a schematic diagram of a scrolling distance and a projected distance according to another exemplary embodiment.

Fig. 3F is a flowchart of another interface display method according to another exemplary embodiment.

Fig. 3G is a schematic diagram of scrolling of an interface content out of a scrolling area according to another exemplary embodiment.

Fig. 3H is a schematic diagram of filling a preset filling content in a blank area according to another exemplary embodiment.

Fig. 4 is a flowchart of an interface display method according to an exemplary embodiment.

Fig. 5 is a flowchart of an interface display method according to another exemplary embodiment.

Fig. 6 is a block diagram of an interface display apparatus according to an exemplary embodiment.

Fig. 7 is a block diagram of an interface display apparatus according to another exemplary embodiment.

Fig. 8 is a block diagram of an interface display apparatus according to an exemplary embodiment.

Fig. 9 is a block diagram of an interface display apparatus according to another exemplary embodiment.

Fig. 10 is a block diagram of an interface display apparatus according to an exemplary embodiment.

**DETAILED DESCRIPTION**

Here, exemplary embodiments will be described in detail, examples of which are illustrated in the accompanying drawings. The following description refers to the accompanying drawings in which the same or similar numbers in different drawings represent the same or similar elements unless otherwise indicated. The implementations set forth in the following description of exemplary embodiments do not represent all implementations consistent with the present invention. Instead, they are merely examples of apparatuses and methods consistent with aspects related to the present invention as recited in the appended claims.

A mobile terminal may display an interface content to a user through a user interface. For example, in a browser, a mobile terminal may display a web page content to a user through a user interface. As another example, in e-book reader software, a mobile terminal may display a content in an e-book to a user through a user interface. As still another example, in a social network application, a mobile terminal may display news of good friends to a user through a user interface. During practical implementation, the user interface may occupy the whole screen of a mobile terminal and may also occupy a part of the screen of the mobile terminal, which is not limited in this embodiment.

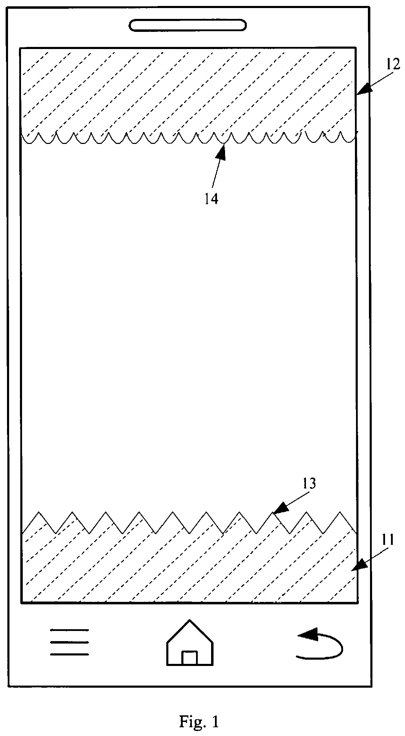

In interface display methods provided in various exemplary embodiments of the present invention, the user interface may include at least one scrolling area at its edge. For example, the user interface may include a scrolling area at at least one of the upper edge, the lower edge, the left edge and the right edge of the user interface. In the example depicted on Fig. 1, the user interface includes two scrolling areas simultaneously:: a first scrolling area 11 at the lower edge and a second scrolling area 12 at the upper edge.

The scrolling area is an area in the user interface between a scrolling line and the screen edge at the side closest to the scrolling line. The scrolling line may be for example any one of a straight line, a broken line and a curved line. For example, referring to Fig. 1, the scrolling line may be a scrolling line 13 with a broken line shape corresponding to the first scrolling area 11 in the figure and may also be a scrolling line 14 with a curved line shape corresponding to the second scrolling area 12 in the figure.

The scrolling line in various exemplary embodiments of the present invention may be a virtual and invisible line and merely used for delimiting the scrolling area. In practical implementation, the distance from the scrolling line to the screen edge may be smaller than a preset threshold. For example, taking the scrolling area being the first scrolling area 11 in Fig. 1 as an example, the distance from the scrolling line 13 to the screen edge may be smaller than 1/5 of the screen length (or equivalently of the screen height).

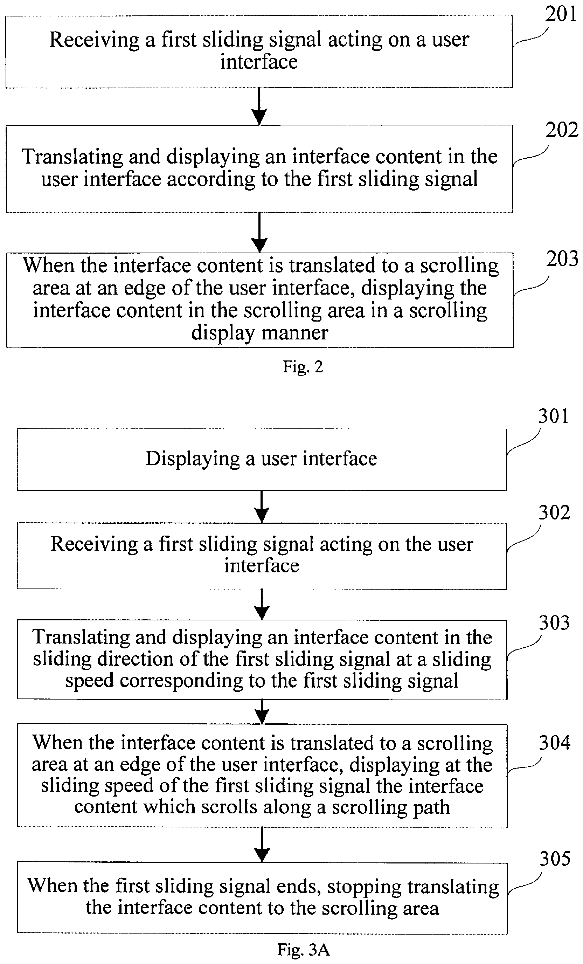

Fig. 2 is a flowchart of an interface display method according to an exemplary embodiment. As shown in Fig. 2, the interface display method includes the following steps.

In step 201, a first sliding signal acting on a user interface is received.

In step 202, an interface content in the user interface is translated and displayed according to the first sliding signal.

In step 203, when the interface content is translated to a scrolling area at an edge of the user interface, the interface content is displayed in the scrolling area in a scrolling display manner.

The scrolling display manner is a display manner in which the interface content is projection-displayed on a plane in which the scrolling area is located when the interface content scrolls and retracts along a scrolling path in a three dimensional space.

In summary, in the interface display method provided in the embodiment of the present invention, when an interface content is translated to a scrolling area at an edge of the user interface, the interface content is displayed in the scrolling area in a scrolling display manner. The scrolling display manner is a display manner in which the interface content is projection-displayed on the plane of the scrolling area when the interface content scrolls and retracts along a scrolling path in a three dimensional space. As such, the problem in the related art that an interface content may disappear suddenly when the interface content slides to the edge of a user interface is solved; and the effects that the interface content can be displayed in a scrolling display manner in the scrolling area at the edge so as to disappear from the user interface smoothly and thus the suddenness caused when the interface content disappears suddenly is reduced are achieved.

Fig. 3A is a flowchart of an interface display method according to an exemplary embodiment. As shown in Fig. 3A, the interface display method includes the following steps.

In step 301, a user interface is displayed.

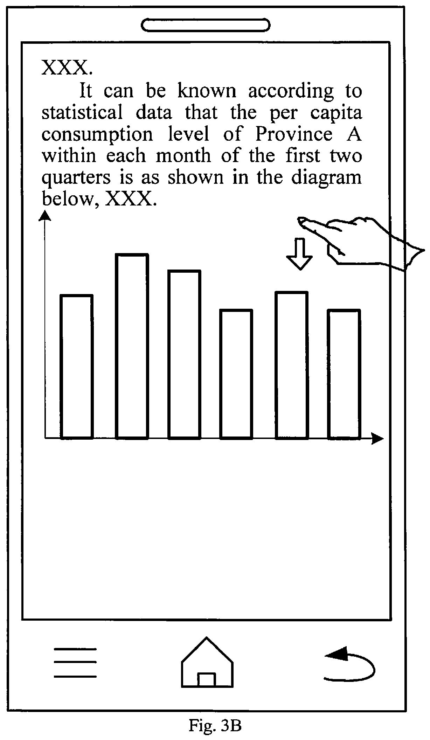

For example, when a user views the per capita consumption level of province A in each month of the first two quarters through a browser in a mobile terminal, the mobile terminal may present the interface shown in Fig. 3B.

In step 302, a first sliding signal acting on the user interface is received.

The first sliding signal may be a sliding signal of sliding upwardly, sliding downwardly, sliding to the left or sliding to the right.

For example, referring additionally to Fig. 3B, when a user wants to view the interface content displayed in a hidden manner at the upper side of the user interface, the user may apply on the user interface a first sliding signal of sliding downwardly. Correspondingly, the mobile terminal may receive the first sliding signal of sliding downwardly. The interface content displayed in a hidden manner in the user interface refers to a content hidden in the user interface on a side opposite to the sliding direction of the first sliding signal.

In step 303, the interface content is translated and displayed in the sliding direction of the first sliding signal at a sliding speed corresponding to the first sliding signal.

Here, translating and displaying refers to translating the interface content in the sliding direction of the first sliding signal and displaying the same.

Taking the sliding speed corresponding to the first sliding signal (i.e., the sliding speed of the user's finger) being $v_{user}$ as an example, the mobile terminal may translate and display the interface content in the sliding direction of the first sliding signal according to $v_{user}$.

It should be noted that: if before the translating and displaying there is an interface content displayed in a hidden manner on a side opposite to the sliding direction of the first sliding signal in the user interface due to size limitation of the user interface, then during the translating and displaying the interface content hidden on the side opposite to the sliding direction of the first sliding signal in the user interface may enter the screen from the outside of the screen in a translation manner, and the interface content in the user interface on a side corresponding to the sliding direction of the first sliding signal may move out of the screen accordingly.

In step 304, when the interface content moves to a scrolling area at an edge of the user interface, the interface content which scrolls along a scrolling path is displayed according to the sliding speed of the first sliding signal.

The scrolling area is an area between the scrolling line of the user interface and the screen edge at the side closest to the scrolling line, the scrolling line being any one of a straight line, a broken line and a curved line.

The scrolling path is a curved path or a broken path; the curved path may include any one of a helical path, a fan-shaped path, an elliptic fan-shaped path, a hyperbolic path and a parabolic path; and the broken path is formed by connecting a start point, an end point and n intermediate points in the three dimensional space according to a preset connection order, n being an integer greater than or equal to 0.

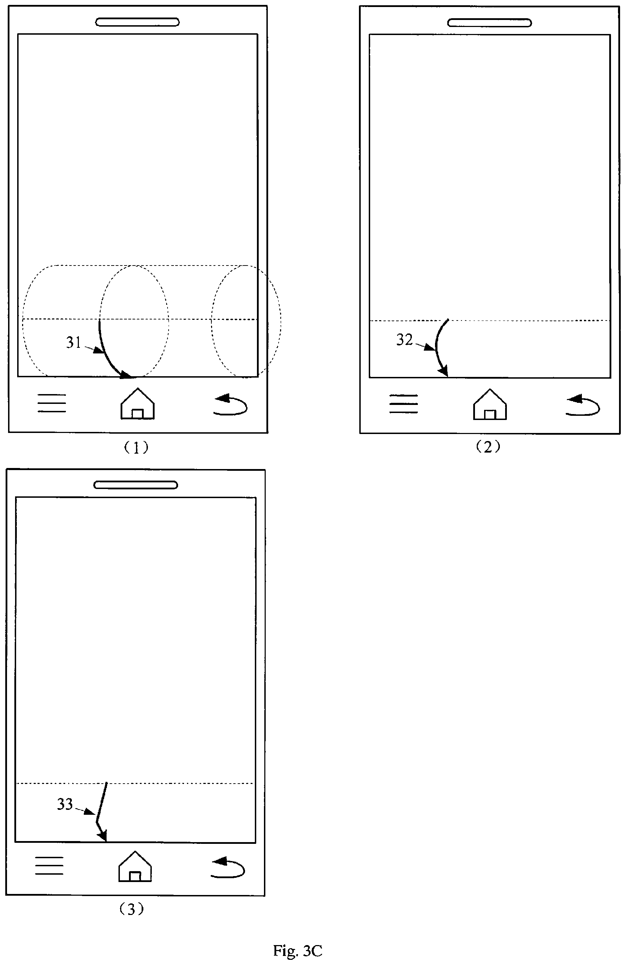

For example, referring to Fig. (1), Fig. (2) and Fig. (3) in Fig. 3C (taking the scrolling line being a straight line as an example), the scrolling path is illustrated as an elliptic fan-shaped path 31, a parabolic path 32 and a broken path 33 respectively. The fan-shaped path is similar to the elliptic fan-shaped path, and the difference lies in that the radii corresponding to two ends of an arc in the fan-shaped path are the same and the radii corresponding to two ends of an arc in the elliptic fan-shaped are different.

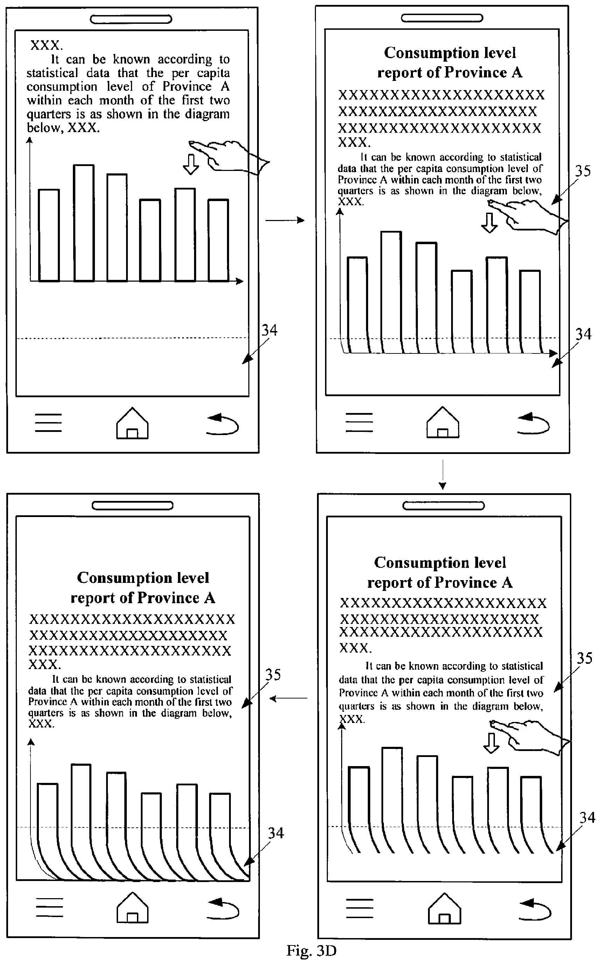

Taking the scrolling path being an elliptic fan-shaped path as an example, referring to Fig. 3D (taking the scrolling line being a straight line as an example in the figure), when the interface content is translated to the scrolling area, the interface content entering the scrolling area 34 is displayed in the scrolling area 34 in a scrolling display manner. The scrolling display manner is a display manner in which the interface content which enters the scrolling area 34 is projection-displayed on a plane 35 where the scrolling area 34 is located when the interface content entering the scrolling area scrolls and retracts along the elliptic fan-shaped path in a three dimensional space.

The scrolling speed of the interface content in the scrolling area is the sliding speed of the first sliding signal, that is, the sliding speed of the interface content is $v_{user}$.

In step 305, when the first sliding signal ends, translation of the interface content to the scrolling area is stopped.

It should be noted that step 303 is just described by way of example as the mobile terminal translating and displaying the interface content according to the sliding speed of the first sliding signal.

Optionally, in a possible implementation, step 303 may be replaced with: displaying the interface content according to a first speed, the first speed being inversely related to a projected distance of a scrolling distance on the plane of the scrolling area, the scrolling distance being a distance which the interface content scrolls along the scrolling path.

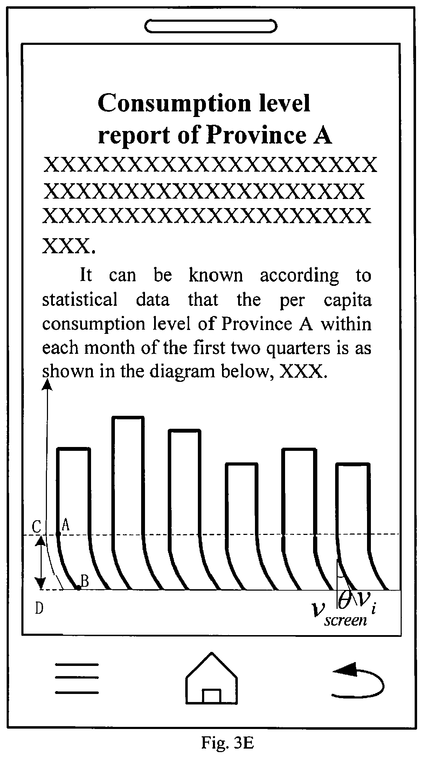

Referring to Fig. 3E, an arc segment AB is the scrolling distance, and a straight segment CD is the projected distance of the scrolling distance on the plane 35 of the scrolling area 34.

The translation speed of the interface content may reduce as the translation distance of the interface content increases, and reduce to zero when the interface content moves to a preset location. Optionally, the first speed denoted $v_i$ may be:

$$v_i = v_{user} * \left(1 - \frac{d_i}{d_{user}}\right) \quad \text{or} \quad v_i = v_{user} * \left(1 - \left(\frac{d_i}{d_{user}}\right)^2\right).$$

Here, $v_{user}$ is the sliding speed of the first sliding signal, $d_{user}$ is the sliding distance of the user's finger from a start where a preset content in the interface content contacts the scrolling line to an end where the preset content reaches a preset location, and $d_i$ is the projected distance of the interface content which enters the scrolling area at time t on the plane of the scrolling area.

The preset content may be a content at a preset location in the user interface corresponding to the first sliding signal or a content in the user interface which is furthest from the scrolling area. The preset location may be a fixed location in the user interface, such as at the scrolling line, and may also be a location offset from the fixed location by a target length. Taking the preset location being the latter as an example, the preset location may be a location where the preset content exists after it reaches the scrolling line and then moves a preset multiple of the finger movement distance. For example, the finger movement distance is d, the preset multiple is 1/2, then the preset location is a location where the preset content exists after reaching the scrolling line and then moving 1/2d.

After step 303 is replaced as above, step 304 may be accordingly replaced with: displaying, according to a first speed, the interface content which scrolls along the scrolling path, the first speed being inversely related to a projected distance of a scrolling distance on the plane of the scrolling area, the scrolling distance being a distance which the interface content scrolls along the scrolling path.

The scrolling speed of the interface content may reduce as the translation distance of the interface content increases, and reduce to zero when a preset content in the interface content moves to a preset location. In an embodiment, the first speed $v_i$ may be:

$$v_i = v_{user} * \left(1 - \frac{d_i}{d_{user}}\right) \quad \text{or} \quad v_i = v_{user} * \left(1 - \left(\frac{d_i}{d_{user}}\right)^2\right).$$

Here, $v_{user}$ is the sliding speed of the first sliding signal, $d_{user}$ is the sliding distance of the user's finger from a start where a preset content in the interface content contacts the scrolling line to an end where the content reaches a preset location, and $d_i$ is the projected distance of the interface content which enters the scrolling area at time t on the plane of the scrolling area.

After the above replacement, step 305 may be replaced with: when a preset content in the interface moves to a preset location in the user interface, stopping translating the interface content to the scrolling area, the preset content being a content at a trigger location in the user interface corresponding to the sliding signal or a content in the user interface which is furthest from the scrolling area.

For example, taking the preset location being a location where the preset content exists after it reaches the scrolling line and then moves a preset multiple of a finger movement distance as an example, then after the preset content moves to the scrolling line and continues moving 1/2d, translation of the interface content to the scrolling area is stopped. Here, d is the movement distance of the finger when the user applies the first sliding signal.

As another example, taking the case where the preset content is a content among interface contents in the user interface which is farthest from the scrolling area and the preset location is the scrolling line as an example, in the user interface shown in Fig. 3B, when the interface content hidden at the uppermost side of the user interface is translated to the scrolling line, translation of the interface content to the scrolling area is stopped.

In another possible implementation, step 303 may be replaced with: translating and displaying, according to a first preset initial speed and a first preset acceleration, the interface content in a uniformly decelerated manner.

The translation speed of the interface content may also be a speed which has the first preset initial speed as its initial speed and decreases uniformly according to the first preset acceleration.

Taking the first preset initial speed being the sliding speed $v_{user}$ of the first sliding signal and the first preset acceleration being a as an example, the translation speed $v_i$ is:

$$v_i = v_{user} - a * t \qquad \left(t \le \frac{v_{user}}{a}\right).$$

After step 303 is replaced as above, step 304 may be replaced with: displaying, according to a first preset initial speed and a first preset acceleration, the interface content which scrolls along the scrolling path in a uniformly decelerated manner.

The scrolling speed of the interface content in the scrolling area may also be a speed which has the first preset initial speed as its initial speed and decreases uniformly according to the first preset acceleration. Taking the first preset initial speed being the sliding speed $v_{user}$ of the first sliding signal and the first preset acceleration being a as an example, the scrolling speed $v_i$ is:

$$v_i = v_{user} - a * t \qquad \left(t \le \frac{v_{user}}{a}\right).$$

After the above replacement, step 305 may be replaced with: when the interface content slides in a decelerated manner and the sliding speed reduces to zero, stopping translating the interface content to the scrolling area.

It should be also noted that the scrolling speed $v_i$ referred to in this embodiment is a speed at which the interface content is displayed in a scrolling display manner along the scrolling path in the three dimensional space, and the speed $v_{screen}$ of the interface content along the movement trajectory on the plane of the scrolling area is a component of $v_i$ on the plane of the scrolling area, that is, $v_{screen} = v_i * \cos\theta$. Here, $\theta$ is an angle between the speed direction at time $t$ of the interface content moving along the scrolling path in the three dimensional space and a projection thereof on the plane of the scrolling area. For example, referring to Fig. 3E, the relations among $v_i$, $v_{screen}$ and $\theta$ are illustrated.

In summary, in the interface display method provided in the embodiments of the present invention, when an interface content is translated to a scrolling area at an edge of a user interface, the interface content is displayed in the scrolling area in a scrolling display manner. The scrolling display manner is a display manner in which the interface content is projection-displayed on the plane of the scrolling area when the interface content scrolls and retracts along a scrolling path in a three dimensional space. As such, the problem in the related art that an interface content may disappear suddenly when the interface content slides to the edge of a user interface is solved; and the effects that the interface content can be displayed in a scrolling display manner in the scrolling area at the edge so as to disappear from the user interface smoothly and thus the suddenness caused when the interface content disappears suddenly is reduced are achieved.

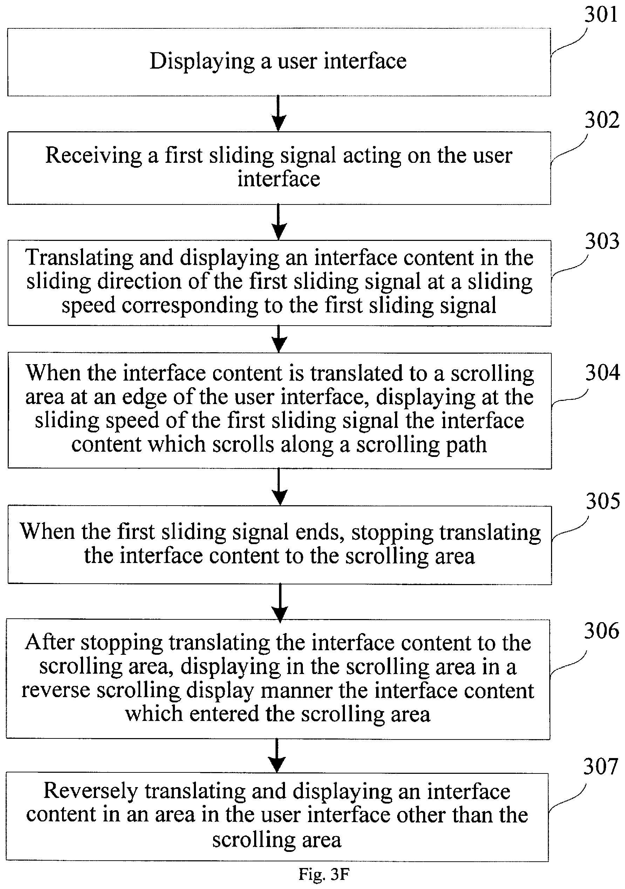

It should be further noted that, after step 305, the mobile terminal may keep the interface content in the user interface stationary. Of course, the mobile terminal may also reversely scroll out the interface content which scrolled into the scrolling area. For example, referring to Fig. 3F, the interface display method may also include the following steps.

In step 306, after stopping translating the interface content to the scrolling area, the interface content which entered the scrolling area is displayed in the scrolling area in a reverse scrolling display manner.

The reverse scrolling display manner is display manner in which the interface content is projection-displayed on the plane of the scrolling area when the interface content scrolls out of the scrolling area reversely along the scrolling path in the three dimensional space. Reverse scrolling display is similar to scrolling display with the difference merely lying in that the scrolling directions of the interface content are opposite, and will not be described here redundantly.

In an embodiment, as a possible implementation, during the movement of the interface content, if there is a blank area at an edge on a side of the user interface opposite to the scrolling area, in order to avoid the problem of wasting display resources of the user interface, the mobile terminal may display in the scrolling area in a reverse scrolling display manner the interface content which entered the scrolling area. The mobile terminal will stop reverse scrolling, when the blank area is filled with an interface content again or when the blank area reaches a preset stopping point.

As another possible implementation, if the user wants to view again the interface content which entered the scrolling area, the user may apply a second sliding signal, and the mobile terminal may receive the second sliding signal accordingly. The second sliding signal has a sliding direction opposite to that of the first sliding signal. After receiving the second sliding signal, the interface content which entered the scrolling area is displayed in the scrolling area in a reverse scrolling display manner. In this case, when the second sliding signal ends, reverse scrolling is stopped.

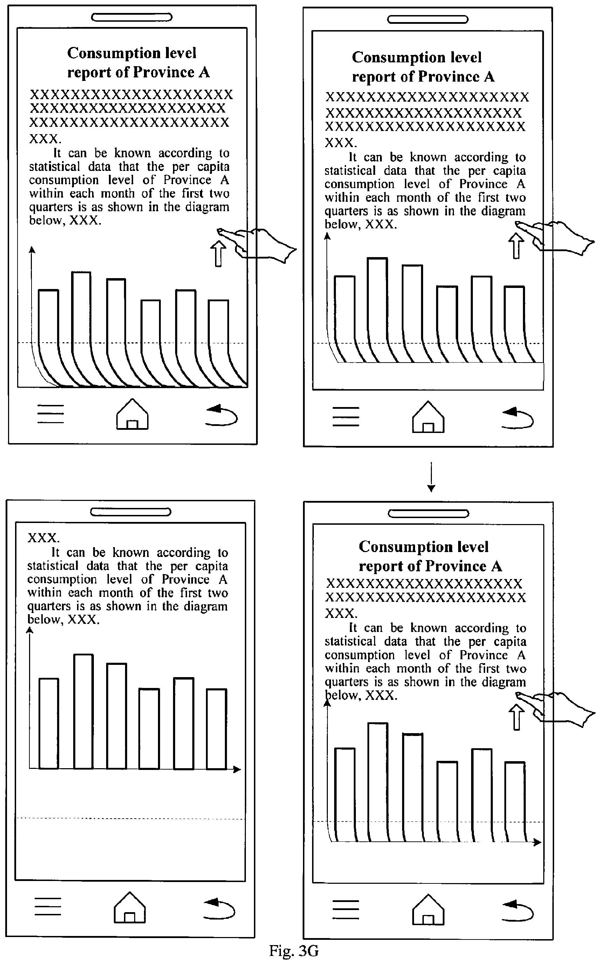

For example, referring to Fig. 3G, after the user applies a second sliding signal of sliding upwardly, the mobile terminal may scroll the interface content in the scrolling area out of the scrolling area along the scrolling path upwardly.

In step 307, an interface content in an area in the user interface other than the scrolling area is reversely translated and displayed.

Similar to step 306, the mobile terminal may reversely translate and display the interface content in an area in the user interface other than the scrolling area.

It should be added that the step of displaying in the scrolling area in a reverse scrolling display manner the interface content which entered the scrolling area may have the following three possible implementations.

In a first implementation, the interface content which scrolls out of the scrolling area reversely along the scrolling path is displayed in the scrolling area according to a preset speed.

In a second implementation, the interface content which scrolls out of the scrolling area along the scrolling path in a uniformly accelerated manner is displayed according to a second preset initial speed and a second preset acceleration.

The second preset initial speed may be zero and may also be another preset value, which is not limited in this embodiment.

Taking the second preset initial speed being zero as an example, the speed $v_i$ for the mobile terminal to scroll out the interface content reversely may be: $v_i = a*t$, $0 \le t \le \sqrt{\dfrac{2d}{a}}$, "a" denotes the second preset acceleration, and d is a distance which the interface content moves after reaching the scrolling line.

In a third implementation, the interface content which scrolls out of the scrolling area along the scrolling path reversely is displayed according to a second speed, the second speed varying as a function of an output of a preset trigonometric function.

The preset trigonometric function may be a sine function or a cosine function, and the speed in this embodiment takes an absolute value of an output of the trigonometric function.

Taking the preset trigonometric function being a sine function as an example, the second speed is

$$v_i = \frac{d_s}{2} * \sin(wt) \quad \text{where } 0 \le t \le \sqrt{\frac{\pi}{w}}, \quad d_s \text{ is a distance from the scrolling line to an edge of the user interface on}$$

a side opposite to the sliding direction of the first sliding signal, and w is a preset scrolling rate.

In this embodiment, it is merely described by way of example that the mobile terminal scrolls the interface content which entered the scrolling area reversely in the above manner. Optionally, the mobile terminal may also do this in another manner, which is not limited in this embodiment.

It should be further added that during the movement of the interface content, if a blank area appears at an edge on a side of the user interface opposite to the scrolling area, the mobile terminal may fill and display a preset filling content in the blank area. The preset filling content may include at least one of a color, a pattern, text, a picture and promotion information.

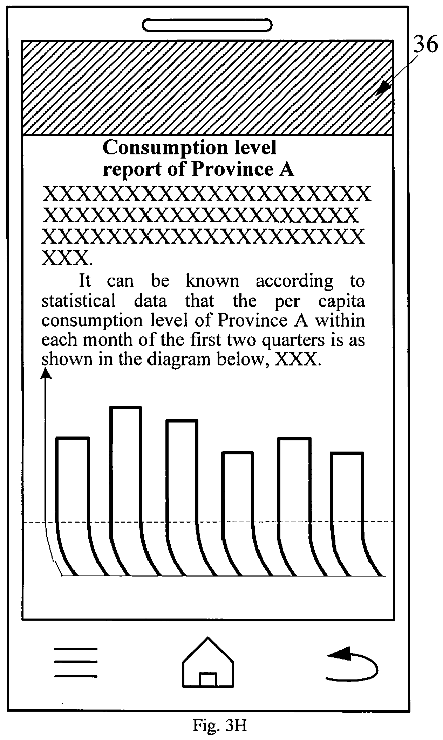

For example, referring additionally to Fig. 3B, if the interface content hidden at the uppermost side of the user interface enters the user interface and continues moving, there will be a blank area at the upper edge of the user interface. In this case, in order to avoid the problem of blank displaying, the mobile terminal may fill and display the preset filling content in this blank area. Taking the filling content being a pattern as an example, the mobile terminal may display the pattern shown in Fig. 3H in the blank area 36.

Optionally, as the translation of the interface content continues, the blank area will expand increasingly, and the mobile terminal may continuously fill this blank area with the preset filling content, which is not limited in this embodiment.

Filling and displaying the present filling content in the blank area avoids the problem of wasting display resources of the user interface due to the blank in the user interface. For example, in the meanwhile, a merchant may promote products to the user by filling promotion information in this blank area, thereby increasing the number and variety of the promotion channels of the merchant.

It should also be added that when the mobile terminal displays the user interface, if some interface content in the user interface is already in the scrolling area, then the step of the mobile terminal displaying the user interface may include: in the scrolling area, displaying the interface content in the scrolling area according to a scrolling path; and within the area other than the scrolling area, displaying the interface contents in the other area in a tiled manner (i.e. translated and displayed). This is not limited in this embodiment.

Displaying the interface content in the scrolling area of the user interface according to a scrolling path avoids the problem that the interface content displayed in a tiled manner may be deformed when it is displayed later in a scrolling display manner in the scrolling area, thereby improving user experience.

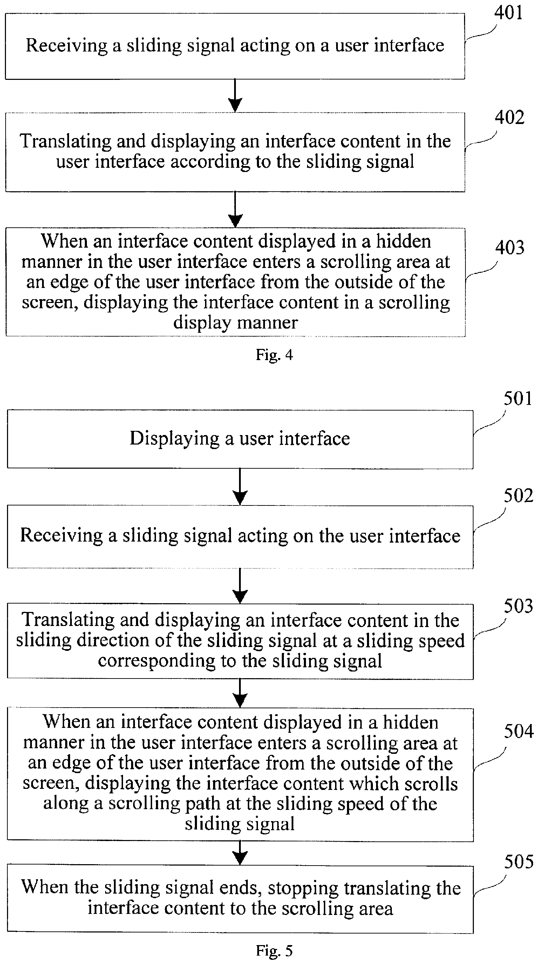

Fig. 4 is a flowchart of an interface display method according to an exemplary embodiment. The above embodiment is to display an interface content in a scrolling area in a scrolling display manner when the interface content is translated to the scrolling area. Unlike the above embodiment, this embodiment is described by way of example as displaying an interface content in a scrolling area in a scrolling display manner when the interface content displayed in a hidden manner in the user interface enters the scrolling area from the outside of the screen. As shown in Fig. 4, the interface display method includes the following steps.

In step 401, a sliding signal acting on a user interface is received.

In step 402, an interface content in the user interface is translated and displayed according to the sliding signal.

In step 403, when an interface content displayed in a hidden manner in the user interface enters a scrolling area at an edge of the user interface from the outside of the screen, the interface content is displayed in the scrolling area in a scrolling display manner.

The scrolling display manner is a display manner in which the interface content is projection-displayed on a plane where the scrolling area is located when the interface content scrolls and retracts along a scrolling path in a three dimensional space.

In summary, in the interface display method provided in the embodiment of the present invention, by displaying an interface content in a scrolling area in a scrolling display manner when the interface content displayed in a hidden manner in a user interface enters the scrolling area at the edge from the outside of the screen, the problem in the related art of the suddenness of interface display occurring when the interface content just enters the screen is solved, and the effects that the interface content can be displayed in the scrolling area in a scrolling display manner so as to smoothly enter the user interface and thus the suddenness caused when the interface content enters the user interface suddenly is reduced are achieved.

Fig. 5 is a flowchart of an interface display method according to an exemplary embodiment. The above embodiment is to display an interface content in a scrolling area in a scrolling display manner when the interface content is translated to the scrolling area. Unlike the above embodiment, this embodiment is described by way of example as displaying an interface content in a scrolling area in a scrolling display manner when the interface content displayed in a hidden manner in the user interface enters the scrolling area from the outside of the screen. As shown in Fig. 5, the interface display method includes the following steps.

In step 501, a user interface is displayed.

In step 502, a sliding signal acting on the user interface is received.

In step 503, an interface content is translated and displayed in the sliding direction of the sliding signal at a sliding speed corresponding to the sliding signal.

Steps 501 to 503 are similar to steps 301 to 303 in the above embodiment, and will not be described here redundantly.

In step 504, when an interface content displayed in a hidden manner in the user interface enters a scrolling area at the edge of the user interface from the outside of the screen, the interface content which scrolls along the scrolling path is displayed according to the sliding speed of the sliding signal.

When an interface content in the user interface is translated and displayed, the interface content displayed in a hidden manner in the user interface before may enter the scrolling area at the edge from the outside of the screen. The interface content displayed in a hidden manner in the user interface refers to a content hidden in the user interface on a side opposite to the sliding direction of the sliding signal.

For example, when the user slides downwardly, the interface content displayed in a hidden manner at the upper side of the user interface may enter the scrolling area at the edge of the screen.

The mobile terminal may display the interface content which enters the scrolling area in a scrolling display manner. The actual display manner is similar to that in step 304 in the above embodiment, and will not be described here redundantly.

In step 505, when the sliding signal ends, translation of the interface content to the scrolling area is stopped.

It should be noted that step 503 is merely described by way of example as the mobile terminal translating and displaying the interface content according to the sliding speed of the sliding signal.

Optionally, in a possible implementation, step 503 may be replaced with: displaying the interface content according to a target speed, the target speed being inversely related to a projected distance of a scrolling distance on the plane of the scrolling area, the scrolling distance being a distance which the interface content scrolls along the scrolling path.

The translation speed of the interface content may reduce as the translation distance of the interface content increases, and reduce to zero when the interface content moves to a preset location. Optionally, the target speed $v_i$ may be:

$$v_i = v_{user} * \left( 1 - \frac{d_i}{d_{user}} \right) \quad \text{or} \quad v_i = v_{user} * \left( 1 - \left( \frac{d_i}{d_{user}} \right)^2 \right).$$

Here, $v_{user}$ is the sliding speed of the sliding signal, $d_{user}$ is the sliding distance of the user's finger from a start where a preset content in the interface content contacts the scrolling line to an end where the content reaches a preset location, and $d_i$ is the projected distance of the interface content which enters the scrolling area at time t on the plane of the user interface.

The preset content may be a content at a trigger location in the user interface corresponding to the sliding signal or a content in the user interface which is furthest from the scrolling area. The preset location may be a fixed location in the user interface, such as at the scrolling line, and may also be a location offset from the fixed location by a target length. Taking the preset location being the latter as an example, the preset location may be a location where the preset content exists after it reaches the scrolling line and then moves a preset multiple of the finger movement distance.

After step 503 is replaced as above, step 504 may be accordingly replaced with: displaying, according to a target speed, the interface content which scrolls along the scrolling path, the target speed being inversely related to a projected distance of a scrolling distance on the plane of the scrolling area, the scrolling distance being a distance which the interface content scrolls along the scrolling path.

The scrolling speed of the interface content may reduce as the translation distance of the interface content increases, and reduce to zero when a preset content in the interface content moves to a preset location. Optionally, the target speed $v_i$ may be:

$$v_i = v_{user} * \left(1 - \frac{d_i}{d_{user}}\right) \quad \text{or} \quad v_i = v_{user} * \left(1 - \left(\frac{d_i}{d_{user}}\right)^2\right).$$

Here, $v_{user}$ is the sliding speed of the sliding signal, $d_{user}$ is the sliding distance of the user's finger from a start where a preset content in the interface content contacts the scrolling line to an end where the content reaches a preset location, and $d_i$ is the projected distance of the interface content which enters the scrolling area at time t on the plane of the scrolling area.

After the above replacement, step 505 may be replaced with: when a preset content in the interface content moves to a preset location in the user interface, stopping translating the interface content to the scrolling area, the preset content being a content at a trigger location in the user interface corresponding to the sliding signal or a content in the user interface which is furthest from the scrolling area.

In another possible implementation, step 503 may also be replaced with: translating and displaying the interface content in a uniformly decelerated manner according to a preset initial speed and a preset acceleration.

Optionally, the translation speed of the interface content in the scrolling area may also be a speed which has the preset initial speed as its initial speed and decreases uniformly from the preset initial speed and which according to the preset acceleration.

Optionally, taking the first initial speed being the sliding speed $v_{user}$ of the sliding signal and the preset acceleration being a as an example, the scrolling speed $v_i$ is:

$$v_i = v_{user} - a * t \left(t \le \frac{v_{user}}{a}\right).$$

After step 503 is replaced as above, step 504 may be replaced with: displaying, according to a preset initial speed and a preset acceleration, the interface content which scrolls along the scrolling path in a uniformly decelerated manner.

Optionally, the scrolling speed of the interface content in the scrolling area may also be a speed which has the preset initial speed as its initial speed and decelerates uniformly according to the preset acceleration.

Optionally, taking the preset initial speed being the sliding speed $v_{user}$ of the sliding signal and the preset acceleration being a an example, the scrolling speed $v_i$ is:

$$v_i = v_{user} - a * t \left(t \le \frac{v_{user}}{a}\right).$$

After the above replacement, step 505 may be replaced with: when the interface content slides in a decelerated manner and the sliding speed reduces to zero, stopping translating the interface content to the scrolling area.

It should be also noted that the scrolling speed $v_i$ referred to in this step is a speed at which the interface content is displayed in a scrolling display manner along the scrolling path in the three dimensional space, and the speed $v_{screen}$ of the interface content along the movement trajectory on the plane of the scrolling area is a component of $v_i$ on the plane of the scrolling area, that is, $v_{screen} = v_i * \cos\theta$. Here, $\theta$ is an angle between the speed direction at time $t$ of the interface content moving along the scrolling path in the three dimensional space and a projection thereof on the plane of the scrolling area.

It should be further noted that when the mobile terminal displays the user interface, if some interface content in the user interface is already in the scrolling area, then the step of the mobile terminal displaying the user interface may include: in the scrolling area, displaying the interface content in the scrolling area according to a scrolling path; and within the area other than the scrolling area, displaying the interface contents in the other area in a tiled manner. This is not limited in this embodiment.

Displaying the interface content in the scrolling area of the user interface according to a scrolling path avoids the problem that the interface content displayed in a tiled manner may be deformed when it is displayed later in a scrolling display manner in the scrolling area, thereby improving user experience.

In summary, in the interface display method provided in the embodiments of the present invention, by displaying an interface content in a scrolling area in a scrolling display manner when the interface content displayed in a hidden manner in a user interface enters the scrolling area at the edge from the outside of the screen, the problem in the related art of the suddenness of interface display occurring when the interface content just enters the screen is solved, and the effects that the interface content can be displayed in the scrolling area in a scrolling display manner so as to smoothly enter the user interface and thus the suddenness caused when the interface content enters the user interface suddenly is reduced are achieved.

The following is apparatus embodiments of the present invention which can be used to execute the method embodiments of the present invention. As to details not disclosed in the apparatus embodiments of the present invention, reference can be made to the method embodiments of the present invention.

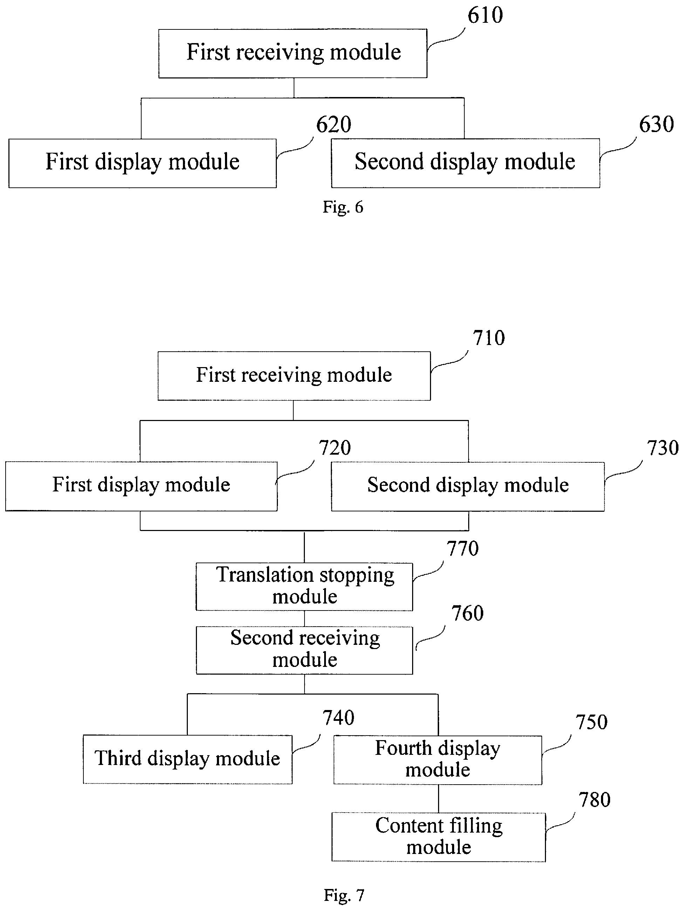

Fig. 6 is a block diagram of an interface display apparatus according to an exemplary embodiment. The interface display apparatus may be implemented as an entirety or a part of a mobile terminal by means of software, hardware, or a combination of both. As shown in Fig. 6, the interface display apparatus may include, but is not limited to, a first receiving module 601, a first display module 620 and a second display module 630.

The first receiving module 610 is configured to receive a first sliding signal acting on a user interface.

The first display module 620 is configured to translate and display an interface content in the user interface according to the first sliding signal received by the first receiving module 610.

The second display module 630 is configured to, when the interface content is translated to a scrolling area at an edge of the user interface, display the interface content in the scrolling area in a scrolling display manner.

The scrolling display manner is a display manner in which the interface content is projection-displayed on a plane where the scrolling area is located when the interface content scrolls and retracts along a scrolling path in a three dimensional space.

In summary, in the interface display apparatus provided in the embodiment of the present invention, when an interface content is translated to a scrolling area at an edge of a user interface, the interface content is displayed in the scrolling area in a scrolling display manner. The scrolling display manner is a display manner in which the interface content is projection-displayed on the plane of the scrolling area when the interface content scrolls and retracts along a scrolling path in a three dimensional space. As such, the problem in the related art that an interface content may disappear suddenly when the interface content slides to the edge of a user interface is solved; and the effects that the interface content can be displayed in a scrolling display manner in the scrolling area at the edge so as to disappear from the user interface smoothly and thus the suddenness caused when the interface content disappears suddenly is reduced are achieved.

Fig. 7 is a block diagram of an interface display apparatus according to an exemplary embodiment. The interface display apparatus may be implemented as an entirety or a part of a mobile terminal by means of software, hardware, or a combination of both. As shown in Fig. 7, the interface display apparatus may include, but is not limited to, a first receiving module 710, a first display module 720 and a second display module 730.

The first receiving module 710 is configured to receive a first sliding signal acting on a user interface.

The first sliding signal may be a sliding signal of sliding upwardly, sliding downwardly, sliding to the left or sliding to the right.

The first display module 720 is configured to translate and display an interface content in the user interface according to the first sliding signal received by the first receiving module 710.

After the first receiving module 710 receives the first sliding signal, the first display module 720 translates and displays the interface content in the user interface according to the sliding direction of the first sliding signal.

The second display module 730 is configured to, when the interface content is translated to a scrolling area at an edge of the user interface, display the interface content in the scrolling area in a scrolling display manner.

The scrolling display manner is a display manner in which the interface content is projection-displayed on a plane where the scrolling area is located when the interface content scrolls and retracts along a scrolling path in a three dimensional space.

When the first display module 720 translates and displays the interface content in the user interface according to the sliding direction of the first sliding signal and the interface content moves to the scrolling line, the second display module 730 may display in the scrolling area in a scrolling display manner the interface content which passes the scrolling line (that is, enters the scrolling area).

Optionally, the scrolling area is an area between a scrolling line of the user interface and the edge, the scrolling line being any one of a straight line, a broken line and a curved line.

The scrolling path is a curved path or a broken path; the curved path includes any one of a helical path, a fan-shaped path, an elliptic fan-shaped path, a hyperbolic path and a parabolic path; and the broken path is formed by connecting a start point, an end point and n intermediate points in the three dimensional space according to a preset connection order, n being an integer greater than or equal to 0.

Optionally, for the second display module 730 to display the interface content in the scrolling area in a scrolling display manner, there may be the following three possible implementations.

In a first implementation, the interface content which scrolls along the scrolling path is displayed according to the sliding speed of the sliding signal.

Taking the sliding speed corresponding to the first sliding signal (i.e., the sliding speed of the user's finger) being $v_{user}$ as an example, the second display module 730 may display the interface content which scrolls along the scrolling path according to $v_{user}$.

In a second implementation, the interface content which scrolls along the scrolling path is displayed according to a first speed, the first speed being inversely related to a projected distance of a scrolling distance on the plane of the scrolling area, the scrolling distance being a distance which the interface content scrolls along the scrolling path.

The scrolling speed of the interface content may reduce as the translation distance of the interface content increases, and reduce to zero when a preset content in the interface content moves to a preset location. Optionally, the first speed $v_i$ may be:

$$v_i = v_{user} * \left( 1 - \frac{d_i}{d_{user}} \right) \quad \text{or} \quad v_i = v_{user} * \left( 1 - \left( \frac{d_i}{d_{user}} \right)^2 \right).$$

Here, $v_{user}$ is the sliding speed of the first sliding signal, $d_{user}$ is the sliding distance of the user's finger from a start where a preset content in the interface content contacts the scrolling line to an end where the content reaches a preset location, and $d_i$ is the projected distance of the interface content which enters the scrolling area at time t on the plane of the scrolling area.

The preset content may be a content at a trigger location in the user interface corresponding to the first sliding signal or a content in the user interface which is furthest from the scrolling area. The preset location may be a fixed location in the user interface, such as at the scrolling line, and may also be a location offset from the fixed location by a target length. Taking the preset location being the latter as an example, the preset location may be a location where the preset content exists after it reaches the scrolling line and then moves a preset multiple of the finger movement distance.

In a third implementation, the interface content which scrolls along the scrolling path in a uniformly decelerated manner is displayed according to a first preset initial speed and a first preset acceleration.

Optionally, the scrolling speed of the interface content in the scrolling area may also be a speed which has the first preset initial speed as its initial speed and decreases uniformly according to the first preset acceleration.

Optionally, taking the first preset initial speed being the sliding speed $v_{user}$ of the first sliding signal and the first preset acceleration being a an example, the scrolling speed $v_i$ is:

$$v_i = v_{user} - a * t \qquad \left( t \le \frac{v_{user}}{a} \right).$$

The scrolling speed $v_i$ in this embodiment is a speed at which the interface content is displayed in a scrolling display manner along the scrolling path in the three dimensional space, and the speed of the interface content along the movement trajectory on the plane of the scrolling area is a component of $v_i$ on the plane of the scrolling area, that is, $v_{screen} = v_i * \cos\theta$. Here, $\theta$ is an angle between the speed direction at time $t$ of the interface content moving along the scrolling path in the three dimensional space and a projection thereof on the plane of the scrolling area.

It should be added that the translation speed at which the first display module 720 translates and displays the interface content is similar to the speed of the scrolling display of the second display module 730, that is, the first display module 720 may also has the following three possible implementations.

In a first implementation, the first display module 720 translates and displays the interface content in the sliding direction of the first sliding signal at a sliding speed of the first sliding signal.

Taking the sliding speed corresponding to the first sliding signal (i.e., the sliding speed of the user's finger is $v_{user}$) as an example, the first display module 720 may translate and display the interface content in the sliding direction of the first sliding signal according to $v_{user}$.

In a second implementation, the interface content is translated and displayed according to a first speed, the first speed being inversely related to a projected distance of a scrolling distance on the plane of the scrolling area, the scrolling distance being a distance which the interface content scrolls along the scrolling path.

The translation speed of the interface content may reduce as the translation distance of the interface content increases, and reduce to zero when the interface content moves to a preset location. Optionally, the first speed $v_i$ may be:

$$v_i = v_{user} * \left(1 - \frac{d_i}{d_{user}}\right) \quad \text{or} \quad v_i = v_{user} * \left(1 - \left(\frac{d_i}{d_{user}}\right)^2\right).$$

Here, $v_{user}$ is the sliding speed of the first sliding signal, $d_{user}$ is the sliding distance of the user's finger from a start where a preset content in the interface content contacts the scrolling line to an end where the content reaches a preset location, and $d_i$ is the projected distance of the interface content which enters the scrolling area at time t on the plane of the user interface.

In a third implementation, the interface content is translated and displayed in a uniformly decelerated manner according to a first preset initial speed and a first preset acceleration.

Optionally, the translation speed of the interface content in the scrolling area may also be a speed which has the first preset initial speed as its initial speed and decreases uniformly according to the first preset acceleration.

Optionally, taking the first initial speed being the sliding speed $v_{user}$ of the first sliding signal and the first preset acceleration being a an example, the scrolling speed $v_i$ is:

$$v_i = v_{user} - a * t \qquad \left(t \le \frac{v_{user}}{a}\right).$$

Optionally, the apparatus further comprises a third display module 740 and a fourth display module 750.

The third display module 740 is configured to, after translation of the interface content to the scrolling area is stopped, display in the scrolling area in a reverse scrolling display manner the interface content which entered the scrolling area.

The reverse scrolling display manner is a display manner in which the interface content is projection-displayed on the plane of the scrolling area when the interface content scrolls out of the scrolling area reversely along the scrolling path in the three dimensional space.

Optionally, as a possible implementation, during the movement of the interface content, if there is a blank area at an edge on a side of the user interface opposite to the scrolling area, in order to avoid the problem of wasting display resources of the user interface, the third display module 740 may display in the scrolling area in a reverse scrolling display manner the interface content which entered the scrolling area. In this case, reverse scrolling is stopped, when the blank area is filled with an interface content again or when the blank area reaches a preset stopping point.

The fourth display module 750 is configured to reversely translate and display an interface content in an area in the user interface other than the scrolling area.

Similar to the third display module 740, the fourth display module 750 may reversely translate and display the interface content in an area in the user interface other than the scrolling area.

Optionally, the apparatus further comprises a second receiving module 760.

The second receiving module 760 is configured to receive a second sliding signal, the second sliding signal having a sliding direction opposite to that of the first sliding signal.

As a possible implementation, if the user wants to view again the interface content which entered the scrolling area, the user may apply a second sliding signal, and the second receiving module 760 may receive the second sliding signal accordingly. The sliding direction of the second sliding signal is opposite to that of the first sliding signal. After receiving the second sliding signal, the third display module 740 displays in the scrolling area in a reverse scrolling display manner the interface content which entered the scrolling area.

Optionally, for the third display module 740 to display the interface content in a reverse scrolling display manner, there may be the following three possible implementations.

In a first implementation, the interface content which scrolls out of the scrolling area reversely along the scrolling path is displayed in the scrolling area according to a preset speed.

In a second implementation, the interface content which scrolls out of the scrolling area along the scrolling path in a uniformly accelerated manner is displayed according to a second preset initial speed and a second preset acceleration.

The second preset initial speed may be zero and may also be another preset value, which is not limited in this embodiment.

Taking the second preset initial speed being zero as an example, the speed $v_i$ for the third display module 740 to scroll out the interface content reversely may be: $v_i$ =a*t, where $0 \leq t \leq \sqrt{\dfrac{2d}{a}}$ and d is a distance which the interface content moves after reaching the scrolling line.

In a third implementation, the interface content which scrolls out of the scrolling area along the scrolling path reversely is displayed according to a second speed, the second speed varying as a function of an output of a preset trigonometric function.

The preset trigonometric function may be a sine function or a cosine function, and the second speed is an absolute value of an output of the trigonometric function. Taking the preset trigonometric function being a sine function as an example, the second speed may be $v_i = \dfrac{d_s}{2}*\sin(wt)$ where $0 \leq t \leq \sqrt{\dfrac{\pi}{w}}$, $d_s$ is a distance from the scrolling line to an edge of the user interface on a side opposite to the sliding direction of the first sliding signal, and w is a preset scrolling rate.

In this embodiment, it is merely described by way of example that the third display module 740 scrolls the interface content which entered the scrolling area reversely in the above several manners. Optionally, the third display module 740 may also do this in another manner, which is not limited in this embodiment.

Optionally, the apparatus further comprises a translation stopping module 770.

The translation stopping module 770 is configured to: when the first sliding signal ends, stop translating the interface content to the scrolling area; when a preset content in the interface content moves to a preset location in the user interface, stop translating the interface content to the scrolling area, the preset content being a content at a trigger location in the user interface corresponding to the first sliding signal or a content in the user interface which is furthest from the scrolling area; or when the interface content slides in a decelerated manner and the sliding speed reduces to zero, stop translating the interface content to the scrolling area.

It should be noted that the three possible implementations of the above translation stopping module 770 may correspond to the three possible implementations of the second display module 730 respectively.

Optionally, the apparatus further comprises a content filling module 780.

The content filling module 780 is configured to, during the movement of the interface content, if a blank area appears at an edge on a side of the user interface opposite to the scrolling area, fill and display a preset filling content in the blank area.

The preset filling content may include at least one of a color, a pattern, text, a picture and promotion information.

Optionally, with the translation of the interface content continues, the blank area will expand increasingly, and accordingly the content filling module 780 may continuously fill this blank area with the preset filling content, which is not limited in this embodiment.

It should be added that when the interface display apparatus displays the user interface, if some interface content in the user interface is already in the scrolling area, then the interface display apparatus displaying the user interface may include: in the scrolling area, displaying the interface content in the scrolling area according to a scrolling path; and within the area other than the scrolling area, displaying the interface content in the other area in a tiled manner. This is not limited in this embodiment.

In summary, in the interface display apparatus provided in the embodiments of the present invention, when an interface content is translated to a scrolling area at an edge of a user interface, the interface content is displayed in the scrolling area in a scrolling display manner. The scrolling display manner is a display manner in which the interface content is projection-displayed on the plane of the scrolling area when the interface content scrolls and retracts along a scrolling path in a three dimensional space. As such, the problem in the related art that an interface content may disappear suddenly when the interface content slides to the edge of a user interface is solved; and the effects that the interface content can be displayed in a scrolling display manner in the scrolling area at the edge so as to disappear from the user interface smoothly and thus the suddenness caused when the interface content disappears suddenly is reduced are achieved.

Filling and displaying the present filling content in the blank area avoids the problem of wasting display resources of the user interface due to the blank in the user interface. In the meanwhile, the merchant may promote products to the user by filling promotion information in this blank area, thereby increasing the number and variety of the promotion channels of the merchant.

Displaying the interface content in the scrolling area of the user interface according to a scrolling path avoids the problem that the interface content displayed in a tiled manner may be deformed when it is displayed later in a scrolling display manner in the scrolling area, thereby improving user experience.

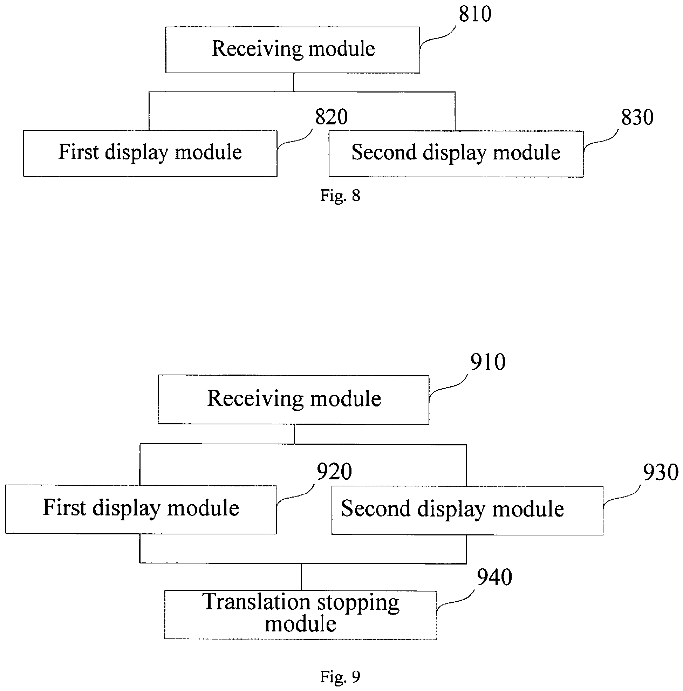

Fig. 8 is a block diagram of an interface display apparatus according to an exemplary embodiment. The interface display apparatus may be implemented as an entirety or a part of a mobile terminal by means of software, hardware, or a combination of both. As shown in Fig. 8, the interface display apparatus may include, but is not limited to, a receiving module 810, a first display module 820 and a second display module 830.

The receiving module 810 is configured to receive a sliding signal acting on a user interface.

The first display module 820 is configured to translate and display an interface content in the user interface according to the sliding signal received by the receiving module 810.

The second display module 830 is configured to, when the interface content displayed in a hidden manner in the user interface is translated to a scrolling area at the edge from the outside of the screen, display the interface content in the scrolling area in a scrolling display manner.

The scrolling display manner is a display manner in which the interface content is projection-displayed on a plane where the scrolling area is located when the interface content scrolls and retracts along a scrolling path in a three dimensional space.

In summary, in the interface display apparatus provided in the embodiment of the present invention, by displaying an interface content in a scrolling area in a scrolling display manner when the interface content displayed in a hidden manner in a user interface enters the scrolling area at the edge from the outside of the screen, the problem in the related art of the suddenness of interface display occurring when the interface content just enters the screen is solved, and the effects that the interface content can be displayed in the scrolling area in a scrolling display manner so as to smoothly enter the user interface and thus the suddenness caused when the interface content enters the user interface suddenly is reduced are achieved.

Fig. 9 is a block diagram of an interface display apparatus according to an exemplary embodiment. The interface display apparatus may be implemented as an entirety or a part of a mobile terminal by means of software, hardware, or a combination of both. As shown in Fig. 9, the interface display apparatus may include, but is not limited to, a receiving module 910, a first display module 920 and a second display module 930.

The receiving module 910 is configured to receive a sliding signal acting on a user interface.

The first display module 920 is configured to translate and display an interface content in the user interface according to the sliding signal received by the receiving module 910.

The implementation method of the first display module 920 is similar to that of the first display module 720 in the above embodiment, and will not be described here redundantly.

The second display module 930 is configured to, when the interface content displayed in a hidden manner in the user interface enters a scrolling area at the edge of the user interface from the outside of the screen, display the interface content in the scrolling area in a scrolling display manner.

The scrolling display manner is a display manner in which the interface content is projection-displayed on a plane where the scrolling area is located when the interface content scrolls and retracts along a scrolling path in a three dimensional space.

Optionally, the scrolling area is an area between a scrolling line of the user interface and the edge, the scrolling line being any one of a straight line, a broken line and a curved line.

The scrolling path is a curved path or a broken path; the curved path includes any one of a helical path, a fan-shaped path, an elliptic fan-shaped path, a hyperbolic path and a parabolic path; and the broken path is formed by connecting a start point, an end point and n intermediate points in the three dimensional space according to a preset connection order, n being an integer greater than or equal to 0.

Optionally, for the second display module 930 to display the interface content in the scrolling area in a scrolling display manner, there may be the following three possible implementations.

In a first implementation, the interface content which scrolls along the scrolling path is displayed according to the sliding speed of the sliding signal.

Taking the sliding speed corresponding to the sliding signal (i.e., the sliding speed of the user's finger) being $v_{user}$ as an example, the second display module 930 may display the interface content which scrolls along the scrolling path according to $v_{user}$.

In a second implementation, the interface content which scrolls along the scrolling path is displayed according to a target speed, the target speed being inversely related to a projected distance of a scrolling distance on the plane of the scrolling area, the scrolling distance being a distance which the interface content scrolls along the scrolling path.

The scrolling speed of the interface content may reduce as the translation distance of the interface content increases, and reduce to zero when a preset content in the interface content moves to a preset location. Optionally, the target speed $v_i$ may be:

$$v_i = v_{user} * \left(1 - \frac{d_i}{d_{user}}\right) \quad \text{or} \quad v_i = v_{user} * \left(1 - \left(\frac{d_i}{d_{user}}\right)^2\right).$$

Here, $v_{user}$ is the sliding speed of the sliding signal, $d_{user}$ is the sliding distance of the user's finger from a start where a preset content in the interface content contacts the scrolling line to an end where the content reaches a preset location, and $d_i$ is the projected distance of the interface content which enters the scrolling area at moment t on the plane of the scrolling area.

The preset content is a content at a trigger location in the user interface corresponding to the sliding signal or a content in the user interface which is furthest from the scrolling area. The preset location may be a fixed location in the user interface, such as at the scrolling line, and may also be a location offset from the fixed location by a target length. Taking the preset location being the latter as an example, the preset location may be a location where the preset content exists after it reaches the scrolling line and then moves a preset multiple of the finger movement distance.

In a third implementation, the interface content which scrolls along the scrolling path in a uniformly decelerated manner is displayed according to a preset initial speed and a preset acceleration.

Optionally, the scrolling speed of the interface content in the scrolling area may also be a speed which has the preset initial speed as its initial speed and decreases uniformly according to the preset acceleration.

Optionally, taking the first initial speed being the sliding speed $v_{user}$ of the sliding signal and the preset acceleration being a as an example, the scrolling speed $v_i$ is:

$$v_i = v_{user} - a * t \qquad \left( t \le v_{user}/a \right).$$

The scrolling speed $v_i$ in this embodiment is a speed at which the interface content is displayed in a scrolling display manner along the scrolling path in the three dimensional space, and the speed of the interface content among the movement trajectory on the plane of the scrolling area is a component of $v_i$ on the plane of the scrolling area, that is, $v_{screen} = v_i * \cos\theta$. Here, $\theta$ is an angle between the speed direction at time $t$ of the interface content moving along the scrolling path in the three dimensional space and a projection thereof on the plane of the scrolling area.

It should be added that the translation speed at which the first display module 920 translates and displays the interface content is similar to the speed of the scrolling display of the second display module 930, that is, the first display module 920 may have the following three possible implementations.

In a first implementation, the first display module 920 translates and displays the interface content in the sliding direction of the sliding signal at a sliding speed of the sliding signal.

Taking the sliding speed corresponding to the first sliding signal (i.e., the sliding speed of the user's finger) being $v_{user}$ as an example, the first display module 920 may translate and display the interface content in the sliding direction of the sliding signal according to $v_{user}$.

In a second implementation, the interface content is translated and displayed according to a target speed, the target speed being inversely related to a projected distance of a scrolling distance on the plane of the scrolling area, the scrolling distance being a distance which the interface content scrolls along the scrolling path.

The translation speed of the interface content may reduce as the translation distance of the interface content increases, and reduce to zero when the interface content moves to a preset location. Optionally, the target speed $v_i$ may be:

$$v_i = v_{user} * \left( 1 - \frac{d_i}{d_{user}} \right) \quad \text{or} \quad v_i = v_{user} * \left( 1 - \left( \frac{d_i}{d_{user}} \right)^2 \right).$$

Here, $v_{user}$ is the sliding speed of the sliding signal, $d_{user}$ is the sliding distance of the user's finger from a start when a preset content in the interface content contacts the scrolling line to an end where the content reaches a preset location, and $d_i$ is the projected distance of the interface content which enters the scrolling area at time t on the plane of the user interface.

In a third implementation, the interface content is translated and displayed in a uniformly decelerated manner according to a preset initial speed and a preset acceleration.

Optionally, the translation speed of the interface content in the scrolling area may also be a speed which has the preset initial speed as its initial speed and which decreases uniformly according to the preset acceleration.

Optionally, taking the first initial speed being the sliding speed $v_{user}$ of the sliding signal and the preset acceleration being a as an example, the scrolling speed $v_i$ is:

$$v_i = v_{user} - a * t \qquad \left( t \le \frac{v_{user}}{a} \right).$$

As to the apparatus in the above embodiment, specific manners for various modules of the apparatus to performing operations have been described in detail in embodiments related to the methods, and will be elaborated here.

Optionally, the apparatus further comprises a translation stopping module 940.

The translation stopping module 940 is configured to: when the sliding signal ends, stop translating the interface content to the scrolling area; when a preset content in the interface content moves to a preset location in the user interface, stop translating the interface content to the scrolling area, the preset content being a content at a trigger location in the user interface corresponding to the sliding signal or a content in the user interface which is furthest from the scrolling area; or when the interface content slides in a decelerated manner and the sliding speed reduces to zero, stop translating the interface content to the scrolling area.

The implementation of the translation stopping module 940 is similar to that of the above translation stopping module 770, and will not be described here redundantly.

It should be added that when the interface display apparatus displays the user interface, if some interface content in the user interface is already in the scrolling area, then the step of the interface display apparatus displaying the user interface may include: in the scrolling area, displaying the interface content in the scrolling area according to a scrolling path; and within the area other than the scrolling area, displaying the interface contents in the other area in a tiled manner. This is not limited in this embodiment.

In summary, in the interface display apparatus provided in the embodiments of the present invention, by displaying an interface content in a scrolling area in a scrolling display manner when the interface content displayed in a hidden manner in a user interface enters the scrolling area at the edge from the outside of the screen, the problem in the related art of the suddenness of interface display occurring when the interface content just enters the screen is solved, the effects that the interface content can be displayed in the scrolling area in a scrolling display manner so as to smoothly enter the user interface and thus the suddenness caused when the interface content enters the user interface suddenly is reduced are achieved.

Displaying the interface content in the scrolling area of the user interface according to a scrolling path avoids the problem that the interface content displayed in a tiled manner may be deformed when it is displayed later in a scrolling display manner in the scrolling area, thereby improving user experience.

In an exemplary embodiment of the present invention, an interface display apparatus is provided, which can implement the interface display method provided in the present invention. The interface display apparatus may include: a processor and a memory for storing processor-executable instructions.

The processor is configured to: receive a first sliding signal acting on a user interface; translate and display an interface content in the user interface according to the first sliding signal; and when the interface content is translated to a scrolling area at an edge of the user interface, display the interface content in the scrolling area in a scrolling display manner, the scrolling display manner being a display manner in which the interface content is projection-displayed on a plane where the scrolling area is located when the interface content scrolls and retracts along a scrolling path in a three dimensional space.

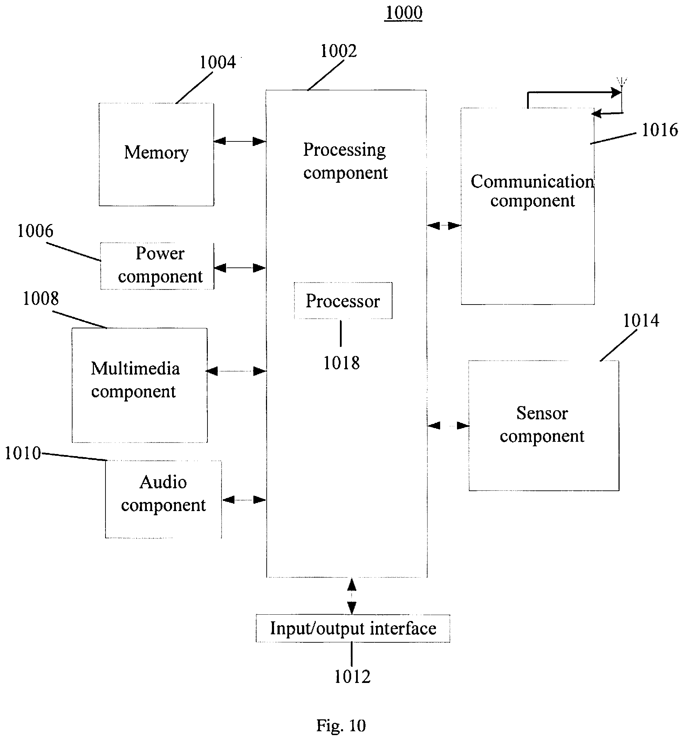

Fig. 10 is a block diagram of an interface display apparatus according to an exemplary embodiment. For example, the apparatus 1000 may be a mobile phone, a computer, a digital broadcast terminal, a messaging device, a gaming console, a tablet, a medical device, exercise equipment, a personal digital assistant or the like.

Referring to Fig. 10, the apparatus 1000 may include one or more of the following components: a processing component 1002, a memory 1004, a power supply component 1006, a multimedia component 1008, an audio component 1010, an input/output (I/O) interface 1012, a sensor component 1014 and a communication component 1016.

The processing component 1002 generally controls the overall operations of the apparatus 1000, for example, display, phone call, data communication, camera operation and record operation. The processing component 1002 may include one or more processors 1018 to execute instructions to perform all or part of the steps in the above described methods. In addition, the processing component 1002 may include one or more modules to facilitate the interaction between the processing component 1002 and other components. For example, the processing component 1002 may include a multimedia module to facilitate the interaction between the multimedia component 1008 and the processing component 1002.

The memory 1004 is configured to store various types of data to support the operation performed on the apparatus 1000. Examples of such data include instructions for any applications or methods operated on the apparatus 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the apparatus 1000. The power component 1006 may include a power supply management system, one or more power sources, and any other components associated with the generation, management, and distribution of power in the apparatus 1000.

The multimedia component 1008 includes a screen providing an output interface between the apparatus 1000 and the user. In some embodiments, the screen may include a Liquid Crystal Display (LCD) and a Touch Panel (TP).If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and the rear camera may receive external multimedia data while the apparatus 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the apparatus 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the apparatus 1000.For instance, the sensor component 1014 may detect an open/closed status of the apparatus 1000, relative positioning of components, e.g., the display and the keypad, of the apparatus 1000, a change in position of the apparatus 1000 or a component of the apparatus 1000, a presence or absence of user contact with the apparatus 1000, an orientation or an acceleration/deceleration of the apparatus 1000, and a change in temperature of the apparatus 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 1016 is configured to facilitate wired or wireless communication between the apparatus 1000 and other devices. The apparatus 1000 can access a wireless network based on a communication standard, such as WiFi, 2G, or 3G, or a combination thereof. In one exemplary embodiment, the communication component 1016 receives a broadcast signal or broadcast related information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described interface display methods.

In exemplary embodiments, there is also provided a non-transitory computer readable storage medium including instructions, such as included in the memory 1004, executable by the processor 1018 of the apparatus 1000, for performing the above-described interface display methods. For example, the non-transitory computer-readable storage medium may be a ROM, a RAM, a CD-ROM, a magnetic tape, a floppy disc, an optical data storage device, and the like.

Other embodiments of the present invention will be apparent to those skilled in the art from consideration of the specification and practice of the present invention disclosed here. This application is intended to cover any variations, uses, or adaptations of the present invention following the general principles thereof and including such departures from the present invention as come within known or customary practice in the art. It is intended that the specification and embodiments be considered as exemplary only, with a true scope and spirit of the present invention being indicated by the appended claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

**Claims**

1. An interface display method, comprising:

   receiving (201,302) a first sliding signal acting on a user interface;
   translating and displaying (202,303) an interface content in the user interface, according to the first sliding signal; and
   when the interface content is translated to a scrolling area (34) at an edge of the user interface, displaying (203,304) the interface content in the scrolling area in a scrolling display manner, the scrolling display manner being a display manner in which the interface content is projection-displayed on a plane (35) where the scrolling area is located when the interface content scrolls and retracts along a scrolling path in a three dimensional space.

2. The method according to claim 1, wherein the scrolling path is a curved path (31,32) or a broken path (33);
   the curved path includes any one of a helical path, a fan-shaped path (32), an elliptic fan-shaped path (31), a hyperbolic path and a parabolic path; and
   the broken path (33) is formed by connecting a start point, an end point and n intermediate points in the three dimensional space according to a preset connection order, n being an integer greater than or equal to 0.

3. The method according to claim 1, wherein the scrolling area (34) is an area between a scrolling line of the user interface and the edge, the scrolling line being any one of a straight line, a broken line and a curved line.

4. The method according to claim 1, wherein displaying the interface content in the scrolling area in a scrolling display manner comprises:

   displaying, according to a sliding speed of the first sliding signal, the interface content which scrolls along the scrolling path; or
   displaying, according to a first speed, the interface content which scrolls along the scrolling path, the first speed being inversely related to a projected distance of a scrolling distance on the plane of the scrolling area, the scrolling distance being a distance which the interface content scrolls along the scrolling path; or
   displaying, according to a first preset initial speed and a first preset acceleration, the interface content which scrolls along the scrolling path in a uniformly decelerated manner.

5. The method according to claim 1, further comprising:

   after stopping (305) translating the interface content to the scrolling area, displaying (306), in the scrolling area in a reverse scrolling display manner, the interface content which entered the scrolling area, the reverse scrolling display manner being a display manner in which the interface content is projection-displayed on the plane of the scrolling area when the interface content scrolls out of the scrolling area reversely along the scrolling path in the three dimensional space; and
   reversely translating and displaying (307) an interface content in an area in the user interface other than the scrolling area.

6. The method according to claim 5, further comprising:

   receiving a second sliding signal, the second sliding signal having a sliding direction opposite to that of the first sliding signal, wherein
   after receiving the second sliding signal, displaying the interface content which entered the scrolling area in the scrolling area in a reverse scrolling display manner.

7. The method according to claim 5 or 6, wherein displaying in the scrolling area in a reverse scrolling display manner the interface content which entered the scrolling area comprises:

   displaying, in the scrolling area according to a preset speed, the interface content which scrolls out of the scrolling area reversely along the scrolling path; or
   displaying, according to a second preset initial speed and a second preset acceleration, the interface content which scrolls out of the scrolling area reversely along the scrolling path in a uniformly accelerated manner; or
   displaying, according to a second speed, the interface content which scrolls out of the scrolling area reversely along the scrolling path, the second speed varying as a function of an output of a preset trigonometric function.

8. The method according to any one of claims 1 to 6, further comprising:

when the first sliding signal ends, stopping translating the interface content to the scrolling area;
or
when a preset content in the interface content moves to a preset location in the user interface, stopping translating the interface content to the scrolling area, the preset content being a content at a trigger location in the user interface corresponding to the first sliding signal or a content in the user interface which is furthest from the scrolling area; or
when the interface content slides in a decelerated manner and its sliding speed reduces to zero, stopping translating the interface content to the scrolling area.

9. The method according to any one of claims 1 to 6, further comprising:

during the movement of the interface content, if a blank area appears at an edge on a side of the user interface opposite to the scrolling area, filling and displaying a preset filling content in the blank area.

10. An interface display method, comprising:

receiving (401) a sliding signal acting on a user interface;
translating and displaying (402) an interface content in the user interface, according to the sliding signal; and
when an interface content displayed in a hidden manner in the user interface enters a scrolling area at an edge of the user interface from the outside of a screen, displaying (403) the interface content in the scrolling area in a scrolling display manner, the scrolling display manner being a display manner in which the interface content is projection-displayed on a plane in which the scrolling area is located when the interface content scrolls and retracts along a scrolling path in a three dimensional space.

11. An interface display apparatus, comprising:

a first receiving module (610) configured to receive a first sliding signal acting on a user interface;
a first display module (620) configured to translate and display an interface content in the user interface according to the first sliding signal; and
a second display module (630) configured to, when the interface content is translated to a scrolling area at an edge of the user interface, display the interface content in the scrolling area in a scrolling display manner, the scrolling display manner being a display manner in which the interface content is projection-displayed on a plane in which the scrolling area is located when the interface content scrolls and retracts along a scrolling path in a three dimensional space.

12. An interface display apparatus, comprising:

a processor (1018); and
a memory (1004) for storing instructions executable by the processor (1018);
wherein the processor (1018) is configured to perform the method of any of claims 1-10.

13. A computer program including instructions for executing the steps of an interface display method according to any one of claims 1 to 10, when said program is executed by a computer.

14. A recording medium readable by a computer and having recorded thereon a computer program including instructions for executing the steps of an interface display method according to any one of claims 1 to 10.

Fig. 1

201

Receiving a first sliding signal acting on a user interface

202

Translating and displaying an interface content in the user interface according to the first sliding signal

203

When the interface content is translated to a scrolling area at an edge of the user interface, displaying the interface content in the scrolling area in a scrolling display manner

Fig. 2

301

Displaying a user interface

302

Receiving a first sliding signal acting on the user interface

303

Translating and displaying an interface content in the sliding direction of the first sliding signal at a sliding speed corresponding to the first sliding signal

304

When the interface content is translated to a scrolling area at an edge of the user interface, displaying at the sliding speed of the first sliding signal the interface content which scrolls along a scrolling path

305

When the first sliding signal ends, stopping translating the interface content to the scrolling area

Fig. 3A

Fig. 3B

Fig. 3C

XXX.
It can be known according to statistical data that the per capita consumption level of Province A within each month of the first two quarters is as shown in the diagram below, XXX.

34

## Consumption level report of Province A

XXXXXXXXXXXXXXXXXXXXX
XXXXXXXXXXXXXXXXXXXXX
XXXXXXXXXXXXXXXXXXXXX
XXX.

It can be known according to statistical data that the per capita consumption level of Province A within each month of the first two quarters is as shown in the diagram below, XXX.

35

34

## Consumption level report of Province A

XXXXXXXXXXXXXXXXXXXXX
XXXXXXXXXXXXXXXXXXXXX
XXXXXXXXXXXXXXXXXXXXX
XXX.

It can be known according to statistical data that the per capita consumption level of Province A within each month of the first two quarters is as shown in the diagram below, XXX.

35

34

## Consumption level report of Province A

XXXXXXXXXXXXXXXXXXXXX
XXXXXXXXXXXXXXXXXXXXX
XXXXXXXXXXXXXXXXXXXXX
XXX.

It can be known according to statistical data that the per capita consumption level of Province A within each month of the first two quarters is as shown in the diagram below, XXX.

35

34

Fig. 3D

# Consumption level
# report of Province A

XXXXXXXXXXXXXXXXXXXXXX
XXXXXXXXXXXXXXXXXXXXXX
XXXXXXXXXXXXXXXXXXXXXX
XXX.

It can be known according to statistical data that the per capita consumption level of Province A within each month of the first two quarters is as shown in the diagram below, XXX.

Fig. 3E

301

Displaying a user interface

302

Receiving a first sliding signal acting on the user interface

303

Translating and displaying an interface content in the sliding direction of the first sliding signal at a sliding speed corresponding to the first sliding signal

304

When the interface content is translated to a scrolling area at an edge of the user interface, displaying at the sliding speed of the first sliding signal the interface content which scrolls along a scrolling path

305

When the first sliding signal ends, stopping translating the interface content to the scrolling area

306

After stopping translating the interface content to the scrolling area, displaying in the scrolling area in a reverse scrolling display manner the interface content which entered the scrolling area

307

Reversely translating and displaying an interface content in an area in the user interface other than the scrolling area

Fig. 3F

**Consumption level
report of Province A**

XXXXXXXXXXXXXXXXXXXXX
XXXXXXXXXXXXXXXXXXXXX
XXXXXXXXXXXXXXXXXXXXX
XXX.
It can be known according to
statistical data that the per capita
consumption level of Province A
within each month of the first two
quarters is as shown in the diagram
below, XXX.

**Consumption level
report of Province A**

XXXXXXXXXXXXXXXXXXXXX
XXXXXXXXXXXXXXXXXXXXX
XXXXXXXXXXXXXXXXXXXXX
XXX.
It can be known according to
statistical data that the per capita
consumption level of Province A
within each month of the first two
quarters is as shown in the diagram
below, XXX.

XXX.
It can be known according to
statistical data that the per capita
consumption level of Province A
within each month of the first two
quarters is as shown in the diagram
below, XXX.

**Consumption level
report of Province A**

XXXXXXXXXXXXXXXXXXXXX
XXXXXXXXXXXXXXXXXXXXX
XXX.
It can be known according to
statistical data that the per capita
consumption level of Province A
within each month of the first two
quarters is as shown in the diagram
below, XXX.

Fig. 3G

30

Consumption level
report of Province A

XXXXXXXXXXXXXXXXXXXXXX
XXXXXXXXXXXXXXXXXXXXX
XXXXXXXXXXXXXXXXXXXXX
XXX.

It can be known according to statistical data that the per capita consumption level of Province A within each month of the first two quarters is as shown in the diagram below, XXX.

36

Fig. 3H

Receiving a sliding signal acting on a user interface

401

↓

Translating and displaying an interface content in the user interface according to the sliding signal

402

↓

When an interface content displayed in a hidden manner in the user interface enters a scrolling area at an edge of the user interface from the outside of the screen, displaying the interface content in a scrolling display manner

403

Fig. 4

Displaying a user interface

501

↓

Receiving a sliding signal acting on the user interface

502

↓

Translating and displaying an interface content in the sliding direction of the sliding signal at a sliding speed corresponding to the sliding signal

503

↓

When an interface content displayed in a hidden manner in the user interface enters a scrolling area at an edge of the user interface from the outside of the screen, displaying the interface content which scrolls along a scrolling path at the sliding speed of the sliding signal

504

↓

When the sliding signal ends, stopping translating the interface content to the scrolling area

505

Fig. 5

610

First receiving module

620                                                                    630

First display module          Second display module

Fig. 6

710

First receiving module

720                                                                    730

First display module          Second display module

770

Translation stopping module

760

Second receiving module

740                                                                    750

Third display module          Fourth display module

780

Content filling module

Fig. 7

810

Receiving module

820                                    830

First display module          Second display module

Fig. 8

910

Receiving module

920                                    930

First display module          Second display module

940

Translation stopping
module

Fig. 9

EP 3 185 114 A1

1000

1004
1002

Memory ↔ Processing component

1006 Power component ↔

1008 Multimedia component ↔

1010 Audio component ↔

Processor
1018

Communication component
1016

1014
Sensor component

Input/output interface
1012

Fig. 10

35

Europäisches
Patentamt

European
Patent Office

Office européen
des brevets

# EUROPEAN SEARCH REPORT

Application Number

EP 16 20 3574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/320969 A1 (HWANG JU HEE [KR] ET AL) 29 December 2011 (2011-12-29) <br> * paragraph [0002] - paragraph [0012] * <br> * paragraph [0125] - paragraph [0128] * <br> ----- | 1-14 | INV. <br> G06F3/0488 <br> G06F3/0481 <br> G06F3/0482 <br> G06F3/0485 |
| X | US 2015/007102 A1 (CHOI YOUNGBERM [KR] ET AL) 1 January 2015 (2015-01-01) <br> * paragraph [0002] - paragraph [0012] * <br> * paragraph [0088] - paragraph [0097]; figures 7A-7D, 8 * <br> ----- | 1-14 | |
| X | US 2011/225545 A1 (HORODEZKY SAMUEL J [US] ET AL) 15 September 2011 (2011-09-15) <br> * paragraph [0002] - paragraph [0003]; figures 12-30 * <br> * paragraph [0070] - paragraph [0086] * <br> ----- | 1-14 | |
| X | US 2014/282146 A1 (FLYNN THOMAS [US] ET AL) 18 September 2014 (2014-09-18) <br> * paragraph [0001] - paragraph [0021] * <br> * paragraph [0037] - paragraph [0051]; figures 2-4 * <br> ----- | 1-14 | TECHNICAL FIELDS SEARCHED (IPC) <br><br> G06F <br> G02F <br> H04M |
| X | US 2012/144342 A1 (YU SEOCK HYUN [KR] ET AL) 7 June 2012 (2012-06-07) <br> * paragraph [0002] - paragraph [0013] * <br> * paragraph [0054] - paragraph [0063]; figures 5A, 5B * <br> * paragraph [0091] - paragraph [0093]; figure 11 * <br> ----- | 1-14 | |

The present search report has been drawn up for all claims

| Place of search | Date of completion of the search | Examiner |
|---|---|---|
| Munich | 27 April 2017 | Anticoli, Claud |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 20 3574

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2017

| Patent document cited in search report | | Publication date | Patent family member(s) | | Publication date |
|---|---|---|---|---|---|
| US 2011320969 | A1 | 29-12-2011 | CN | 102298493 A | 28-12-2011 |
| | | | EP | 2400367 A2 | 28-12-2011 |
| | | | KR | 20120000663 A | 04-01-2012 |
| | | | US | 2011320969 A1 | 29-12-2011 |
| US 2015007102 | A1 | 01-01-2015 | EP | 2838000 A1 | 18-02-2015 |
| | | | KR | 20150002312 A | 07-01-2015 |
| | | | US | 2015007102 A1 | 01-01-2015 |
| US 2011225545 | A1 | 15-09-2011 | CN | 102782637 A | 14-11-2012 |
| | | | EP | 2545431 A2 | 16-01-2013 |
| | | | JP | 5738323 B2 | 24-06-2015 |
| | | | JP | 2013521568 A | 10-06-2013 |
| | | | KR | 20120139783 A | 27-12-2012 |
| | | | US | 2011225545 A1 | 15-09-2011 |
| | | | WO | 2011112323 A2 | 15-09-2011 |
| US 2014282146 | A1 | 18-09-2014 | KR | 20140114758 A | 29-09-2014 |
| | | | US | 2014282146 A1 | 18-09-2014 |
| US 2012144342 | A1 | 07-06-2012 | CN | 103250123 A | 14-08-2013 |
| | | | EP | 2649510 A1 | 16-10-2013 |
| | | | JP | 5980801 B2 | 31-08-2016 |
| | | | JP | 2014505920 A | 06-03-2014 |
| | | | KR | 20120063172 A | 15-06-2012 |
| | | | US | 2012144342 A1 | 07-06-2012 |
| | | | WO | 2012077906 A1 | 14-06-2012 |

EPO FORM P0459

For more details about this annex : see Official Journal of the European Patent Office, No. 12/82